(19) Europäisches Patentamt
European Patent Office
Office européen des brevets

(11) **EP 3 132 237 B1**

(12) **FASCICULE DE BREVET EUROPÉEN**

(45) Date de publication et mention de la délivrance du brevet:
**18.11.2020 Bulletin 2020/47**

(21) Numéro de dépôt: **15721775.3**

(22) Date de dépôt: **17.04.2015**

(51) Int Cl.:
**G01J 3/44** *(2006.01)*     **G02B 21/00** *(2006.01)*
**G01N 21/65** *(2006.01)*     **G02B 26/10** *(2006.01)*

(86) Numéro de dépôt international:
**PCT/FR2015/051055**

(87) Numéro de publication internationale:
**WO 2015/159035 (22.10.2015 Gazette 2015/42)**

(54) **APPAREIL ET PROCÉDÉ DE MICROSCOPIE À BALAYAGE DE FAISCEAU OPTIQUE**

VORRICHTUNG UND VERFAHREN FÜR LICHTRASTERMIKROSKOPIE

APPARATUS AND METHOD OF SCANNING OPTICAL MICROSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2014 FR 1453479**

(43) Date de publication de la demande:
**22.02.2017 Bulletin 2017/08**

(73) Titulaire: **Horiba France SAS**
**91120 Palaiseau (FR)**

(72) Inventeurs:
• **FRETEL, Emmanuel**
**59170 Croix (FR)**

• **ANDREZEJEUSKY, Damien**
**59650 Villeneuve d'Ascq (FR)**
• **BOIDIN, René**
**59310 Beuvry la Fôret (FR)**
• **DE BETTIGNIES, Philippe**
**59130 Lambersart (FR)**

(74) Mandataire: **Jacobacci Coralis Harle**
**32, rue de l'Arcade**
**75008 Paris (FR)**

(56) Documents cités:
**WO-A1-2010/069987**     **JP-A- 2001 091 848**
**US-A1- 2005 128 476**

**Description**

La présente invention concerne de manière générale le domaine des appareils et procédés de microscopie à balayage de faisceau optique ou à déplacement angulaire de faisceau optique.

Elle concerne plus particulièrement un appareil et procédé de micro-spectrométrie Raman à balayage de faisceau laser.

L'invention s'applique aussi à d'autres formes de microscopie optique à balayage de faisceau optique telles que la microscopie de photoluminescence, de fluorescence ou de cathodoluminescence. Dans ces appareils de microscopie optique à balayage, le faisceau optique de balayage peut être un faisceau laser ou un faisceau émis par une diode électroluminescente (LED), comme par exemple dans un spectrofluorimètre de type TCSPC (time-correlated single photon counting).

On connaît notamment du document de brevet EP1983332A un procédé d'imagerie spectroscopique et un système d'exploration par balayage de la surface d'un échantillon. Le document EP1983332A décrit un appareil d'imagerie spectroscopique comprenant un dispositif de balayage, aussi appelé scanner, pour explorer la surface d'un échantillon fixe par déplacement angulaire d'un faisceau d'excitation laser suivant des directions orthogonales. Plus précisément, le document EP1983332A décrit un dispositif de balayage placé dans le tube d'un microscope confocal de manière à être inséré entre l'objectif de microscope et le filtre d'injection-réjection d'un spectromètre Raman. Le dispositif de balayage comporte deux miroirs galvanométriques disposés en série sur le trajet optique du faisceau laser. Les deux miroirs galvanométriques ont des axes de rotation transverses entre eux pour déplacer angulairement le faisceau laser suivant des directions orthogonales sur la surface de l'échantillon. Le système optique à deux miroirs fonctionne dans un sens pour déplacer angulairement le faisceau laser d'excitation de manière à le positionner en différents points de la surface de l'échantillon. Par retour inverse de la lumière, ce système optique à deux miroirs fonctionne dans le sens inverse pour collecter un faisceau de rétro-diffusion Raman et le transmettre en direction d'un système de détection, par exemple un spectromètre Raman. L'avantage de ce système est que la source laser et le système de détection restent fixes. Cet appareil permet d'acquérir une image par spectrométrie Raman d'une portion de la surface d'un échantillon avec une résolution d'environ 50x50 points en une dizaine de minutes.

D'autres documents de brevet décrivent des appareil de microscopie à balayage de faisceau (voir par exemple WO 2010/069987, US 2005/128476 ou JP 2001 091848).

La dimension de la zone balayée sur l'échantillon dépend notamment du grossissement de l'objectif de microscope utilisé. Pour une même amplitude de rotation des miroirs, le changement de grossissement de l'objectif de microscope permet de modifier l'étendue de la surface balayée sur l'échantillon.

Les objectifs de microscope utilisés peuvent être de différents types : standard, à longue frontale (Long Working Distance ou LWD), adaptés pour le visible et/ou l'ultraviolet.

Toutefois, quel que soit le grossissement de l'objectif de microscope, on constate en pratique que l'étendue de la surface accessible par déplacement angulaire du faisceau laser sur la surface de l'échantillon est nettement inférieure au champ optique de l'objectif de microscope. Dans le présent document, on entend par champ objet, le champ optique dans le plan de focalisation de l'objectif de microscope.

Ainsi, à titre d'exemple, on utilise différents objectifs de microscope tels que des objectifs de grossissement 100X, 50X et 10X. Chaque objectif de microscope est défini par une ouverture numérique (Numerical Aperture ou NA), une distance focale, un nombre de champ (Field Number ou FN) et un diamètre.

On calcule une largeur maximale de champ optique en fonction de la distance frontale qui correspond à la distance entre la face avant de l'objectif et l'échantillon.

En pratique, on calcule la largeur maximale de champ optique d'un objectif de microscope en appliquant la formule suivante :

$$\text{Largeur du champ} = \text{Nombre de champ} / \text{Grossissement}.$$

Le tableau suivant indique les valeurs des paramètres de différents objectifs de marque OLYMPUS de type Mplan N 100X, 50X et 10X respectivement :

**Tableau 1 : propriétés optiques de différents objectifs de microscope**

|  | Olympus MPLAN N 100X | Olympus MPLAN N 50X | Olympus MPLAN N 10X |
|---|---|---|---|
| Ouverture Numerique | 0,90 | 0,75 | 0,25 |
| Distance focale | 1,8mm | 3,6mm | 18mm |
| Nombre de champ | 22mm | 22mm | 22mm |

EP 3 132 237 B1

(suite)

|  | Olympus MPLAN N 100X | Olympus MPLAN N 50X | Olympus MPLAN N 10X |
|---|---|---|---|
| Diamètre de la lentille | 3,24mm | 5,4mm | 9mm |
| Largeur maximum du champ optique | 220$\mu$m | 440$\mu$m | 2200$\mu$m |

La largeur maximum de champ optique indiquée dans le tableau ci-dessus correspond à la largeur de champ optique d'imagerie à travers l'objectif de microscope.

Cependant, en pratique, la largeur de champ accessible par balayage ou déplacement angulaire d'un faisceau laser à travers chacun de ces objectifs de microscope est en pratique nettement inférieure à la largeur maximum de champ de l'objectif considéré.

Ainsi, pour un objectif Olympus MPLAN N 50X, on mesure expérimentalement que la largeur de champ de l'appareil de microscopie à balayage laser deux axes, dit DuoScan, effectivement accessible est d'environ +- 27 microns, alors que la largeur maximum du champ optique de cet objectif est de 440 microns. De même, pour un objectif Olympus MPLAN N 10X, le champ par balayage laser du Duoscan est d'environ 200 microns, alors que la largeur maximum du champ optique de cet objectif est de 2200 microns.

Cette limitation de la largeur de champ accessible par balayage laser est due au vignettage du faisceau laser sur les ouvertures des composants optiques. Pour limiter cet effet, on est amené à réduire le diamètre du faisceau laser, ce qui a pour effet néfaste de réduire la résolution spatiale (lambda/NA) car on réduit l'ouverture numérique effective de l'objectif de microscope en sous-couvrant la pupille.

Afin d'étendre la zone spatiale d'exploration d'un faisceau de balayage laser sur un échantillon, différentes solutions ont été proposées. Une première solution consiste à changer l'objectif de microscope pour réduire le grossissement. Un inconvénient du changement de grossissement est que la résolution spatiale des mesures est proportionnelle au grossissement de l'objectif. Une autre solution consiste à combiner un balayage par inclinaison angulaire de l'axe du faisceau laser avec un déplacement relatif de l'échantillon par rapport à l'objectif de microscope.

Cependant, le changement d'objectif de microscope ou le déplacement d'une table porte-échantillon prend du temps. De plus, ces opérations induisent une modification discontinue du champ imagé par l'appareil de microscopie. On obtient en général une série d'images contiguës qu'il est difficile de recombiner pour former une image complète de l'échantillon sur une zone étendue avec une bonne résolution spatiale.

Une autre limitation est la qualité des mesures de spectrométrie Raman obtenue par balayage. On observe en effet que la qualité des mesures de microspectrométrie Raman à balayage est inférieure à la qualité des mesures prises sans balayage, pour des paramètres d'acquisition des mesures par ailleurs identiques.

De plus, il n'est pas possible de visualiser directement sur l'image d'une caméra, la position du faisceau de balayage sur l'échantillon. Il est donc difficile de contrôler l'emplacement du faisceau laser, par exemple dans des applications à la mesure de biochips.

Un des buts de l'invention est d'augmenter la largeur de champ accessible par balayage de faisceau optique dans un appareil de microscopie à balayage pour se rapprocher de la largeur maximum du champ optique de cet appareil de microscopie.

Un des buts de l'invention est d'accroître l'étendue spatiale du champ de mesure sans modifier la résolution spatiale des mesures ni la qualité des mesures.

Un autre but de l'invention est d'améliorer la qualité des mesures de microspectrométrie Raman à balayage tout en diminuant la durée d'acquisition des mesures.

Un autre but de l'invention est de limiter les pertes d'intensité sur un faisceau laser incident et sur un faisceau de diffusion Raman.

Afin de remédier aux inconvénients précités de l'état de la technique, la présente invention propose un appareil de microscopie à balayage de faisceau optique selon la revendication 1. Dans un mode de réalisation particulier, la présente invention propose un appareil de microscopie à balayage de faisceau optique selon les revendications dépendantes 2-9.

L'invention propose également un procédé de microscopie à balayage de faisceau optique selon la revendication 10.

Ainsi, le procédé de l'invention permet d'asservir la position du faisceau optique de balayage sur le centre de la pupille de l'objectif de microscope, quelle que soit l'inclinaison du faisceau optique par rapport à l'axe optique de l'objectif de microscope.

L'invention trouvera une application particulièrement avantageuse en imagerie par microscopie à déplacement angulaire de faisceau laser, de manière à balayer la surface d'un échantillon pour former une image de l'échantillon, par exemple de microspectrométrie Raman, de photoluminescence, de microspectrométrie Raman de type CARS (Co-

3

herent anti-Stokes Raman scattering), micro-CARS, Raman à sonde ou encore de microspectrométrie à deux photons.

L'invention trouvera aussi une application particulièrement avantageuse en microscopie, où le déplacement d'un faisceau optique, par exemple d'un faisceau laser est effectué par pas discrets afin de pointer le faisceau laser en des points prédéterminés d'une surface, par exemple dans des applications d'analyse de biochips. Un balayage de faisceau laser discontinu, par pas, permet de sonder des échantillons, par exemple biologiques (bio-chips), tous les 100 microns sur une même surface, puis d'effectuer une mesure et une analyse ponctuelle (ex. spectrométrie Raman) ou par balayage local d'un micro-échantillon. Dans ces applications, l'invention permet, sans déplacement du bio-chip d'explorer un champ plus grand et ainsi de sonder un nombre de micro-échantillons mesurés plus grand, avec une plus grande précision des pas de déplacement du faisceau laser.

L'invention trouvera aussi des applications en microscopie avec un balayage continu du faisceau optique.

Dans un exemple lié à la présente invention et avantageux, le balayage continu d'un faisceau optique est synchronisé avec un détecteur de type CCD par exemple, pour transférer rapidement l'enregistrement d'une ligne de balayage vers une mémoire électronique, de manière à former rapidement une image de la surface d'un échantillon balayé.

Dans un autre exemple lié à la présente invention, appelé macrospot, le balayage continu d'un faisceau optique est combiné à une intégration du signal détecté sur un détecteur, par exemple de type photomultiplicateur (PMT), de manière à moyenner la mesure sur une zone prédéterminée de l'échantillon à analyser, et éventuellement analyser plus précisément une zone de l'échantillon où est détecté un signal particulier.

Le système et le procédé de microscopie à balayage de faisceau optique de l'invention sont compatibles avec toutes formes de balayage sur l'échantillon suivant des lignes, un carré, un cercle...

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- les figures 1-2 représentent schématiquement le principe du balayage d'un faisceau laser pour déplacer la position d'un faisceau laser sur un échantillon ou pour balayer un échantillon selon l'art antérieur ;
- les figures 3 et 4 illustrent des phénomènes de vignettage du faisceau de balayage laser dans un appareil de microscopie à balayage de faisceau laser à deux axes de balayage selon l'art antérieur ;
- la figure 5 représente schématiquement le balayage d'un faisceau laser sur l'objectif d'un appareil de microscopie à balayage selon l'invention ;
- la figure 6 représente un système de balayage de faisceau laser selon un exemple lié à la présente invention
- la figure 7 représente schématiquement un appareil de micro-spectrométrie Raman comprenant un dispositif à deux axes de balayage selon un exemple lié à la présente invention ;
- la figure 8 représente une variante de configuration des miroirs dans un exemple lié à la présente invention;
- la figure 9 représente un schéma de tracé de rayons dans un système à deux axes de balayage du système à miroirs de la figure 8 ;
- les figures 10-15 illustrent différentes variantes de configuration des miroirs dans un système à deux axes de balayage de faisceau laser selon un exemple lié à la présente invention;
- les figures 16-18 illustrent un système de balayage de faisceau laser suivant deux axes de balayage selon un mode de réalisation de l'invention ;
- les figures 19-22 représentent différentes mesures obtenues avec un appareil de microscopie à balayage laser selon l'invention.

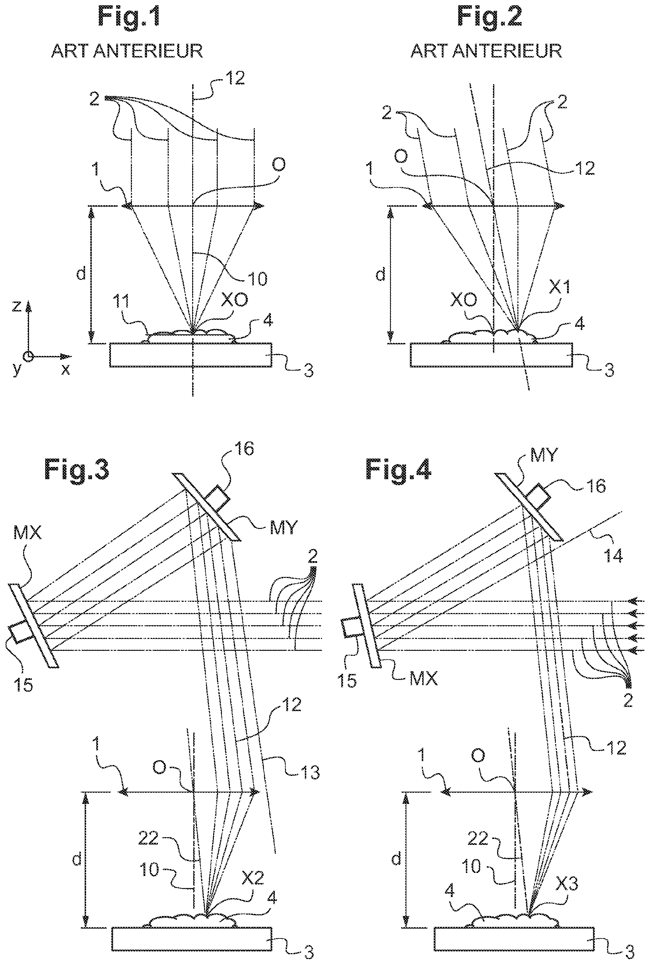

Les figures 1-2 représentent schématiquement le principe du balayage d'un faisceau laser pour déplacer la position d'un faisceau laser sur un échantillon ou pour balayer un échantillon.

Un objectif de microscope 1 est disposé sur l'axe optique 10 d'un appareil de microscopie. Un échantillon 4 est placé sur un porte-échantillon 3 à une distance *d* de l'objectif de microscope 1. Une source laser émet un faisceau laser 2 collimaté. Un miroir plan (non représenté) réfléchit le faisceau laser en direction de l'objectif de microscope 1. L'objectif de microscope 1 focalise le faisceau laser dans le plan focal 11 de l'objectif de microscope 1.

Par convention dans le présent document, l'axe optique 10 de l'objectif de microscope 1 est parallèle à l'axe Z d'un repère orthonormé XYZ et le plan focal 11 de l'objectif de microscope 1 est dans un plan XY.

On définit l'axe du faisceau laser comme étant l'axe optique longitudinal de propagation du faisceau. Pour un faisceau laser de répartition spatiale gaussienne, l'axe 12 du faisceau laser est situé au centre du faisceau laser.

Sur la figure 1, l'axe 12 du faisceau laser 2 est parallèle et centré sur l'axe 10 de l'objectif de microscope 1. Le faisceau laser est focalisé au foyer X0 de l'objectif de microscope.

Sur la figure 2, on incline angulairement l'axe 12 du faisceau laser 2, par exemple au moyen d'un miroir plan disposé sur le trajet du faisceau laser 2, ce miroir étant mobile en rotation, de manière à ce que le faisceau laser soit focalisé en un deuxième point X1 du plan focal 11. Pendant le balayage du faisceau laser, la source laser (non représentée) et l'objectif de microscope sont en général fixes, seul le miroir étant mobile en rotation. L'axe de rotation du miroir est par exemple parallèle à l'axe Y et en général proche de la surface réfléchissante du miroir. Une rotation du miroir entraîne un déplacement angulaire du faisceau laser 2. Ce déplacement angulaire du faisceau laser 2 par rapport à l'axe optique 10 de l'objectif de microscope 1 permet ainsi de balayer ou scanner la surface de l'échantillon 4 entre les points X0 et X1, de manière continue ou pas par pas. Cependant, ce déplacement angulaire dû à la rotation du miroir, produit un décentrage de l'axe 12 du faisceau laser par rapport au centre O de la pupille de l'objectif de microscope 1.

Pour un angle d'inclinaison du faisceau laser 2 supérieur à une première valeur seuil, on observe un phénomène de vignettage, une partie du faisceau laser étant obturée par les bords de la pupille de l'objectif de microscope. Le phénomène de vignettage augmente avec l'angle d'inclinaison du faisceau laser, jusqu'à une obturation complète du faisceau laser pour une deuxième valeur seuil d'angle d'inclinaison. Les seuils d'obturation partielle et complète du faisceau laser dépendent de l'ouverture de la pupille de l'objectif et de l'étendue du faisceau laser. On observe une obturation partielle du faisceau qui réduit progressivement l'intensité du faisceau laser d'excitation et, par retour inverse de la lumière, l'intensité du faisceau Raman détecté. On constate donc que les phénomènes de vignettage limitent la zone accessible par déplacement angulaire du faisceau sur l'échantillon.

Afin de limiter le vignettage dans un système de balayage à un axe, une possibilité est de réduire le diamètre du faisceau laser d'excitation. Cependant, une diminution du diamètre du faisceau laser produit une augmentation du diamètre du faisceau au point focal, qui se traduit par une diminution de la résolution spatiale de l'appareil de microscopie par balayage de faisceau.

Dans un système à un axe de balayage, tel que représenté sur les figures 1-2, les effets de vignettage peuvent être réduits en rapprochant le miroir mobile en rotation de l'objectif de microscope 1.

Cependant, les appareils de microscopie à balayage de faisceau ne sont en général pas limités à un seul axe de balayage.

Ainsi, la plupart des appareils de microscopie à balayage de faisceau combinent des inclinaisons du faisceau autour de deux axes de rotation orthogonaux pour déplacer angulairement le faisceau sur la surface d'un échantillon suivant deux directions transverses.

Les figures 3-4 représentent schématiquement en vue de côté un appareil de microscopie comprenant un système de balayage à deux axes pour illustrer le principe et analyser les limites du balayage de faisceau à deux axes. Les mêmes signes de référence désignent les mêmes éléments que sur les figures 1-2. Le système de balayage comporte un premier miroir plan M-X et un second miroir plan M-Y disposés en série sur le trajet optique du faisceau laser 2. Le premier miroir M-X, équipé par exemple d'un moteur galvanométrique 15, est mobile en rotation autour d'un premier axe, par exemple parallèle à l'axe Y, de manière à induire un déplacement angulaire du faisceau laser 2 suivant l'axe X dans le plan focal 11. Le second miroir M-Y, équipé d'un moteur galvanométrique 16, est mobile en rotation autour d'un second axe, par exemple parallèle à l'axe X, de manière à induire un déplacement angulaire du faisceau laser 2 suivant l'axe Y dans le plan focal 11. Les moteurs 15 et 16 sont commandés pour effectuer des rotations prédéterminées et effectuer un parcours de forme définie sur la surface de l'échantillon.

En microscopie Raman, le faisceau de balayage laser est aussi le faisceau d'excitation qui induit l'émission Raman par l'échantillon. En configuration de rétro-diffusion, le faisceau de diffusion Raman est collecté dans la direction du faisceau incident d'excitation, cette direction d'émission-réception étant fixe. Le faisceau Raman est en général séparé du faisceau de diffusion Raman au moyen de filtres de réjection, de type coupe bande (notch filter), passe-bande (edge filter) ou encore filtre à réseau de diffraction de Bragg (Volume Bragg Grating ou VBG). On sait que la très faible intensité des signaux Raman par rapport à la diffusion Rayleigh exige un excellent rapport signal sur bruit. Il est donc essentiel d'éclairer l'échantillon avec un faisceau d'intensité lumineuse suffisante et de collecter la plus grande partie du faisceau de diffusion Raman.

Cependant, le rapport signal-sur-bruit en microspectrométrie Raman à balayage semble limité ce qui conduit à augmenter la durée d'acquisition pour obtenir une image complète. De plus, le champ objet sur l'échantillon est aussi limité à un champ beaucoup plus réduit que le champ nominal de l'objectif de microscope.

Dans la cadre de la présente invention, les limites en rapport signal sur bruit et en champ de balayage sont analysées comme suit.

Comme illustré sur les figures 3-4, le premier miroir M-X et le second miroir M-Y sont disposés en série sur le trajet optique d'un faisceau laser 2, entre une source laser (non représentée) et un objectif de microscope 1. L'axe de l'objectif de microscope est ici confondu avec l'axe optique 10 du microscope. On suppose qu'au repos, c'est-à-dire avec des angles d'inclinaison nuls, le premier et second miroirs M-X, M-Y sont disposés de manière à ce que l'axe 12 du faisceau laser soit confondu avec l'axe optique 10 de l'objectif de microscope 1, c'est-à-dire que l'axe optique du faisceau laser est centré et parallèle à l'axe optique 10 de l'objectif de microscope 1.

On cherche à déplacer le faisceau laser sur l'échantillon d'un point X0, situé à l'intersection de l'axe optique 10 et du plan focal 11 de l'objectif de microscope 1, vers un point X2, le long de l'axe X. Pour déplacer le faisceau laser 2, on commande le moteur galvanométrique 15 pour qu'il induise une inclinaison angulaire DELTA-X du premier miroir M-X autour de l'axe Y. Le faisceau incident provenant de la source reste immobile. Le faisceau réfléchi sur la surface du miroir M-X subit une rotation d'un angle égal à 2xDELTA-X autour de l'axe Y. Le faisceau réfléchi par le premier miroir M-X se déplace ainsi sur la surface du second miroir M-Y. Le second miroir M-Y réfléchit à nouveau le faisceau laser en direction de l'objectif de microscope. Le faisceau réfléchi par le second miroir M-Y se déplace angulairement et latéralement sur la pupille de l'objectif de microscope 1. L'axe du faisceau laser incident sur l'objectif de microscope est incliné d'un angle égal à 2xDELTA-X par rapport à l'axe optique 10 de l'objectif de microscope 1. L'objectif de microscope 1 focalise ainsi le faisceau laser au point X2, situé à l'intersection du plan focal de l'objectif de microscope 1 et d'une droite 22 passant par le centre O de la pupille de l'objectif et parallèle à l'axe 12 du faisceau laser collimaté incident sur l'objectif.

De manière analogue, une rotation du second miroir M-Y d'un angle de rotation RY autour d'un axe parallèle à l'axe X produit un déplacement angulaire du faisceau laser égal à 2xDELTA-Y. Ainsi, la rotation du second miroir M-Y produit un déplacement angulaire du faisceau laser sur la pupille de l'objectif 1 et un déplacement du faisceau focalisé dans la direction Y.

Toutefois, pour un angle d'inclinaison DELTA-X supérieur à une valeur seuil, on observe sur la figure 3 qu'un rayon 13 du faisceau laser, situé en dehors de la pupille de l'objectif, n'est pas focalisé au point X2. De ce fait, l'intensité du faisceau laser incident sur l'échantillon est réduite. Ce phénomène de vignettage peut expliquer une baisse du rapport signal sur bruit des points mesurés sur les bords du champ, qui correspondent à des angles d'inclinaison supérieurs à une certaine valeur seuil. Pour un angle d'inclinaison du premier miroir M-X supérieur à une autre valeur seuil, le faisceau laser est entièrement obturé par la pupille de l'objectif de microscope.

Des limitations analogues proviennent de l'inclinaison d'un angle DELTA-Y du faisceau laser par le second miroir M-Y sur l'objectif de microscope 1.

De manière analogue au système de balayage monoaxe, le système de balayage à deux axes peut donc être limité par des phénomènes de vignettage dus aux déplacements angulaires du premier axe et/ou du deuxième axe sur la pupille de l'objectif de microscope.

D'autre part, la figure 4 illustre un autre effet de vignettage du faisceau laser dans un système à deux axes de balayage. Sur la figure 4, on a représenté le faisceau laser incliné d'un angle DELTA-X au moyen du premier miroir M-X et du premier moteur galvanométrique 15. Le déplacement du faisceau laser sur la surface du second miroir M-Y est tel qu'un rayon 14 du faisceau laser se situe en dehors de la pupille du second miroir M-Y. Le second miroir M-Y ne peut alors pas réfléchir le rayon 14 en direction de l'objectif de microscope. Ce rayon 14 n'est donc pas focalisé au point X3 sur l'échantillon. En extrapolant l'inclinaison du faisceau laser de la figure 4, on constate que le faisceau laser est complètement obturé par la pupille du second miroir M-Y lorsque angle d'inclinaison DELTA-X est supérieur à une deuxième valeur seuil d'angle d'inclinaison.

Selon la dimension du second miroir M-Y, un système de balayage à deux axes peut donc aussi être limité par des phénomènes de vignettage dus au déplacement angulaire du faisceau par rapport à la pupille du second miroir M-Y.

De manière analogue, l'inclinaison angulaire du premier miroir M-X par rapport au faisceau laser d'excitation peut produire des phénomènes de vignettage, lorsque le diamètre du faisceau laser est supérieur au diamètre apparent de la pupille du premier miroir M-X.

Il ressort de cette analyse que, dans un appareil de microscopie à balayage suivant deux axes, les déplacements du faisceau laser dans le plan focal le long de l'axe X et/ou respectivement l'axe Y, sont ainsi limités par des effets de vignettage dus à la pupille du premier miroir M-X, du second miroir M-Y et/ou à la pupille de l'objectif de microscope.

De manière plus générale, le déplacement d'un faisceau laser par balayage dans un appareil de microscopie est limité en champ transverse et en intensité par des phénomènes de vignettage dûs au système optique formé des différents composants optiques disposés en série sur le trajet optique du faisceau laser. Ces phénomènes de vignettage semblent en particulier dus aux miroirs de balayage M-X, M-Y et/ou à l'objectif de microscope 1.

Cependant, dans un système à deux axes de balayage, l'encombrement des deux miroirs de renvoi M-X, M-Y disposés en série sur le trajet optique du faisceau laser, ne permet pas de réduire efficacement la distance entre le premier miroir et l'objectif de microscope, si bien que les effets de vignettage restent importants.

Il découle de la présente analyse que le principal problème, lors de l'utilisation d'un appareil de microscopie Raman à deux axes de balayage de faisceau, se situe au niveau de la pupille à l'entrée de l'objectif de microscope 1, comme illustré en lien avec les figures 3 et 4. Une partie 13 du faisceau arrivant sur la pupille de l'objectif du microscope ne passe pas par l'ouverture de l'objectif car cette partie 13 du faisceau est déplacée au-delà de la limite physique de la pupille (Fig.3). Une partie du faisceau laser d'excitation est ainsi perdue. Dans une configuration de mesure de rétrodiffusion Raman, par application du retour-inverse de la lumière, une partie du faisceau rétrodiffusé est également obturée par la pupille de l'objectif de microscope. La réduction d'intensité du faisceau laser d'excitation et du faisceau de diffusion Raman induit une réduction d'intensité du signal de diffusion Raman détecté. Par ailleurs, une autre partie 14 du faisceau réfléchi par le premier miroir M-X est déviée en dehors de la pupille du second miroir et n'est pas réfléchie en direction de l'objectif de microscope. De même, une partie du faisceau de rétrodiffusion Raman est obturée par les bords du second miroir M-Y. Cette autre partie du faisceau laser d'excitation 14 et du faisceau rétrodiffusé correspondant induit aussi une réduction dans le signal de diffusion Raman détecté. Par ailleurs, les faisceaux 13 et 14 qui ne sont pas réfléchis dans la direction de l'échantillon, peuvent se réfléchir sur d'autres surfaces et être ainsi à la source de faisceaux parasites qui contribuent aussi à réduire le rapport signal sur bruit du signal de diffusion Raman détecté.

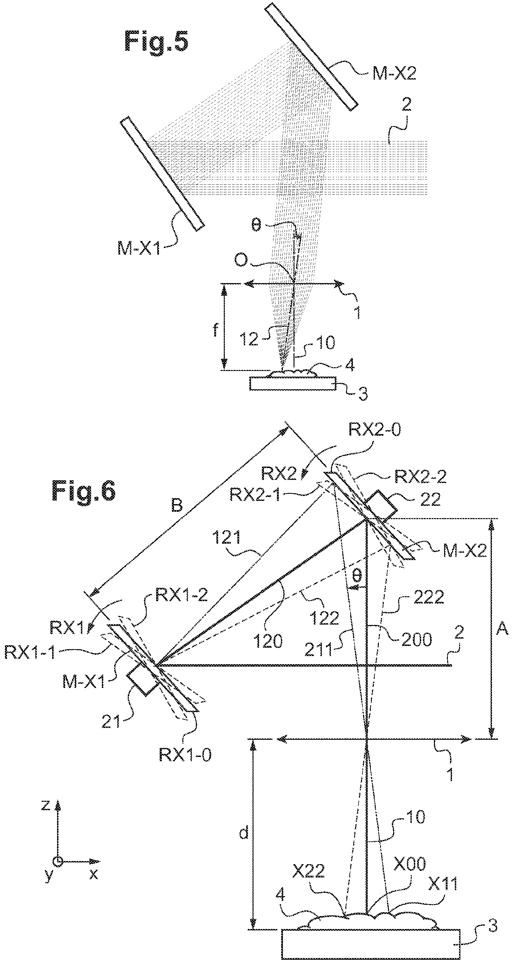

Nous allons maintenant décrire le principe de la solution proposée dans le cadre de la présente invention en lien avec la figure 5. Sur cette figure, l'inclinaison angulaire du faisceau laser s'effectue par pivotement de l'axe du faisceau laser autour du centre O de la pupille d'entrée de l'objectif de microscope 1. Ainsi, le faisceau laser reste centré sur la pupille de l'objectif de microscope pendant le balayage du faisceau. Cette inclinaison angulaire permet de réduire les phénomènes de vignettage pour limiter les pertes d'intensité sur le faisceau laser incident et pour accroître la zone de champ accessible par balayage de faisceau.

Ce déplacement est obtenu par la mise en œuvre de deux miroirs pour chaque axe de balayage, les deux miroirs étant disposés en série sur le trajet optique du faisceau optique 2. Par exemple, le premier miroir M-X1 est incliné angulairement de manière à induire un balayage suivant l'axe X dans le plan focal et le second miroir M-X2 est incliné angulairement suivant le même axe de balayage X de manière à recentrer le faisceau sur la pupille de l'objectif de microscope 1.

Le déplacement X du faisceau dans le plan focal sur l'échantillon pour un angle d'inclinaison θ de l'axe 12 du faisceau par rapport à l'axe optique 10 de l'objectif de microscope se calcule par la formule suivante :

$$X = f \cdot \tan(\theta) \qquad (I)$$

On en déduit, dans le tableau suivant, le déplacement X du faisceau en fonction de l'angle d'inclinaison pour différents objectifs de microscope :

**Tableau 2: déplacement en fonction de l'angle d'inclinaison du faisceau sur l'objectif**

| Θ (degrés) | 100X | 50X | 10X |
|---|---|---|---|
| 1 | 31 μm | 62 μm | 314 μm |
| 1,5 | 47 μm | 94 μm | 471 μm |
| 2 | 63 μm | 125 μm | 628 μm |
| 2,5 | 78 μm | 157 μm | 785 μm |
| 3 | 94 μm | 189 μm | 943 μm |

Le tableau 1 indique, pour un objectif 10X, une largeur de champ optique maximale de 2,2 mm qui correspond à une demi-largeur de champ ou à un déplacement latéral de faisceau X de 1,1mm. Sur le tableau 2, on observe qu'un angle d'inclinaison θ de 3 degrés de l'axe du faisceau centré sur l'axe de cet objectif 10X permet de couvrir une largeur de champ de 2x 943 microns soit environ 1886 microns, c'est-à-dire d'atteindre quasiment la limite de la largeur de champ optique. Or un angle d'inclinaison de l'axe d'un faisceau de 3 degrés peut être obtenu par réflexion sur un miroir et rotation de ce miroir d'un angle de 1,5 degré.

Les figures 6 à 18 illustrent différents exemples liés à la présente invention qui permettent d'obtenir un balayage de faisceau suivant un ou deux axes par pivotement du faisceau laser autour du centre O de la pupille d'entrée de l'objectif de microscope, tout en conservant le centrage du faisceau laser sur le centre O de la pupille d'entrée de l'objectif de microscope.

La figure 6 représente un système à un axe de balayage de faisceau laser selon un exemple lié à la présente invention. Le système de balayage comporte un premier miroir plan M-X1 et un deuxième miroir plan M-X2. Le premier miroir M-X1 et deuxième miroir M-X2 sont disposés en série sur le trajet optique du faisceau laser 2 entre la source du faisceau laser et l'objectif de microscope 1, par exemple dans le tube confocal d'un microscope confocal. Le premier miroir M-X1 est mobile en rotation autour d'un axe, par exemple parallèle à l'axe Y. Le deuxième miroir M-X2 est mobile en rotation autour d'un axe qui est de préférence parallèle à l'axe de rotation du premier miroir M-X1 et donc parallèle à l'axe Y. De façon avantageuse, un premier moteur 21 commande la rotation du premier miroir M-X1 et un deuxième moteur 22 commande la rotation du deuxième miroir M-X2. Les moteurs 21, 22 sont par exemple des moteurs galvanométriques ou des moteurs pas par pas. Préférentiellement, un système de contrôle (non représenté) pilote les déplacements angulaires combinés du premier miroir M-X1 et du deuxième miroir M-X2.

De manière illustrative et nullement limitative, on a représenté sur la figure 6 différents angles d'inclinaison du premier miroir M-X1 et du deuxième miroir M-X2.

Dans une première orientation des miroirs du système de balayage, le premier miroir M-X1 présente un angle d'inclinaison RX1-0 et le deuxième miroir M-X2 un angle d'inclinaison RX2-0. Dans cette première orientation des miroirs, le faisceau laser incident 2 est réfléchi sur le premier miroir M-X1 dans la direction 120 puis sur le deuxième miroir M-X2 dans la direction 200. Les angles d'inclinaison RX1-0 du premier miroir M-X1 et RX2-0 du deuxième miroir sont tels que le faisceau laser dans la direction 200 est aligné sur l'axe optique 10 de l'objectif de microscope 1 et centré sur le centre O de la pupille d'entrée de l'objectif de microscope 1. Dans cette première configuration, l'objectif de microscope focalise le faisceau laser au point focal X0-0. Par retour inverse, le faisceau rétrodiffusé par le point X00 se propage le long de l'axe 200, est réfléchi par le deuxième miroir M-X2 puis par le premier miroir M-X1 dans la direction du faisceau laser incident 2.

Dans une deuxième orientation des miroirs illustrée sur la figure 6, le premier miroir M-X1 présente un angle d'inclinaison RX1-1 et le deuxième miroir M-X2 un angle d'inclinaison RX2-1. Dans cette deuxième orientation des miroirs, le faisceau laser incident d'axe 12 est réfléchi sur le premier miroir M-X1 dans la direction 121 puis sur le deuxième miroir M-X2 dans la direction 211. Les angles d'inclinaison RX1-1 du premier miroir M-X1 et RX2-1 du deuxième miroir sont tels que le faisceau laser dans la direction 211 est incliné par rapport à l'axe optique de l'objectif de microscope 1 tout en restant centré sur le centre O de la pupille d'entrée de l'objectif de microscope 1. Avantageusement, le premier miroir M-X1 produit une inclinaison de l'axe du faisceau et le deuxième miroir M-X2 recentre l'axe incliné du faisceau 211 sur le centre de la pupille de l'objectif. Dans cette deuxième configuration, l'objectif de microscope 1 focalise le faisceau laser au point X11. On obtient ainsi un déplacement angulaire de l'axe du faisceau, du point X00 au point X11 sur l'échantillon. Par retour inverse, le faisceau rétrodiffusé par le point X11 se propagent dans la direction 211 est réfléchi successivement par le miroir M-X2 dans la direction 121, puis par le miroir M-X1 dans la direction du faisceau incident 2.

De manière analogue, dans une troisième orientation des miroirs illustrée sur la figure 6, le premier miroir M-X1 présente un angle de rotation RX1-2 et le deuxième miroir M-X2 un angle de rotation RX2-2. Dans cette troisième orientation des miroirs, le faisceau laser incident 2 est réfléchi sur le premier miroir M-X1 dans la direction 122 puis sur le deuxième miroir M-X2 dans la direction 222. Les angles d'inclinaison RX1-2 du premier miroir M-X1 et RX2-2 du deuxième miroir sont tels que le faisceau laser dans la direction 222 est incliné par rapport à l'axe optique de l'objectif de microscope 1 tout en restant centré sur le centre O de la pupille d'entrée de l'objectif de microscope 1. Ainsi, le premier miroir M-X1 produit une inclinaison de l'axe du faisceau et le deuxième miroir M-X2 recentre l'axe incliné du faisceau 222 sur le centre de la pupille de l'objectif. Dans cette troisième configuration, l'objectif de microscope 1 focalise le faisceau laser au point X22. On obtient ainsi un déplacement angulaire de l'axe du faisceau vers le point X22 sur l'échantillon. Par retour inverse, le faisceau rétrodiffusé par le point X22 se propageant dans la direction 222 est réfléchi successivement par le miroir M-X2 dans la direction 122, puis par le miroir M-X1 dans la direction du faisceau incident 2.

La combinaison d'un angle de rotation du premier miroir M-X1 et d'un angle de rotation du deuxième miroir M-X2 permet donc d'obtenir un décalage angulaire du faisceau qui reste centré sur le centre O de la pupille de l'objectif de microscope.

L'angle d'inclinaison $\theta$ de l'axe 211 du faisceau par rapport à l'axe optique 10 est égal au double de l'angle de rotation RX2 du deuxième miroir M-X2.

Afin de calculer l'angle de rotation du miroir M-X2 en fonction de l'inclinaison du miroir M-X1, nous utilisons l'équation suivante :

$$RX2 = ((ArcSIN(-B \times SIN(2 \times RX1)/A) - 2 \times RX1 + \pi/2)/2 - \pi/4 \qquad (II)$$

Où :

RX1 représente l'angle de rotation du miroir M-X1 (en radians),
RX2 représente l'angle de rotation du miroir M-X2 (en radians) ;
A la distance de convergence des rayons (en mm), ou focale de l'objectif 1 ; et
B la distance entre les miroirs M-X1 et M-X2 (en mm).

Dans le cas particulier où les angles RX1, RX2 sont petits (en pratique inférieurs à environ une quelques degrés), on démontre qu'il existe une relation linéaire entre le mouvement des deux miroirs. Dans ce cas, le système électronique de contrôle de la rotation des miroirs est aussi un système linéaire et donc simple.

Enfin, dans le cas particulier où B est égal à A, le rapport des angles de rotation entre le miroir M-X1 et le miroir M-X2 est égal à 2, et ce quel que soit l'angle d'inclinaison $\theta$.

Un système électronique peut être configuré pour piloter conjointement l'angle de rotation RX1 du premier miroir M-X1 et l'angle de rotation RX2 du deuxième miroir M-X2, afin d'obtenir le centrage de l'axe du faisceau incliné sur l'axe de l'objectif de microscope. Le système électronique est adapté en fonction de la configuration des miroirs M-X1 et M-X2 et des distances A et B.

Comme indiqué dans le tableau 2, un angle d'inclinaison $\theta$ de l'axe 12 du faisceau de balayage laser limité à quelques degrés suffit pour déplacer angulairement le faisceau sur la totalité du champ optique des objectifs les plus courants. Or, comme indiqué plus haut, l'angle de rotation RX2 du deuxième miroir est égal à la moitié de l'angle d'inclinaison $\theta$ du faisceau. Et l'angle de rotation RX1 du premier miroir est égal en valeur absolue au double de l'angle de rotation RX2 (application de la formule approchée (III) ci-dessus). Les angles de rotation du premier et deuxième miroir sont donc limités à quelques degrés pour couvrir la totalité du champ optique de l'objectif de microscope tout en restant centrés sur la pupille de l'objectif de microscope. Or, un faible angle de rotation du premier miroir permet de limiter d'amplitude de déplacement du faisceau sur la face du deuxième miroir et ainsi de limiter l'effet de vignettage.

On observe que la taille des miroirs M-X1 et M-X2 peut être différente. De préférence, le deuxième miroir M-X2, a une taille plus grande que le premier miroir M-X1. En effet, le premier miroir M-X1 est centré sur faisceau laser incident qui reste de direction fixe tandis que le deuxième miroir M-X2 compense le déplacement du faisceau laser sur sa surface lors de la rotation du premier miroir M-X1.

Le principe détaillé sur la figure 6 pour un axe de déplacement angulaire (X) du faisceau se généralise à un système de balayage suivant deux axes (XY). Pour cela par exemple, on dispose en série sur le trajet optique du faisceau, un premier système optique à deux miroirs mobiles en rotation, par exemple autour d'un axe Y pour produire un déplacement suivant une première direction X (comme détaillé sur la figure 6) et un deuxième système optique analogue à deux miroirs mobiles en rotation, par exemple autour d'un axe X pour produire un déplacement suivant une direction transverse Y. Les quatre miroirs sont disposés de manière à ce que le déplacement angulaire du faisceau par les deux premiers miroirs reste centré sur la pupille d'entrée du deuxième système optique à deux miroirs, et de manière à ce qu'un déplacement angulaire suivant l'un, l'autre ou les deux axes transverses, reste centré sur le centre O de la pupille d'entrée de l'objectif de microscope.

De préférence, le microscope est de type confocal et le système de balayage de faisceau est disposé avantageusement sur le trajet commun laser-détection, et plus précisément entre le filtre d'injection-réjection 18 et l'objectif 1 du microscope.

De manière alternative, dans un microscope non confocal moins avantageux, le système de balayage de faisceau est disposé sur le trajet laser uniquement.

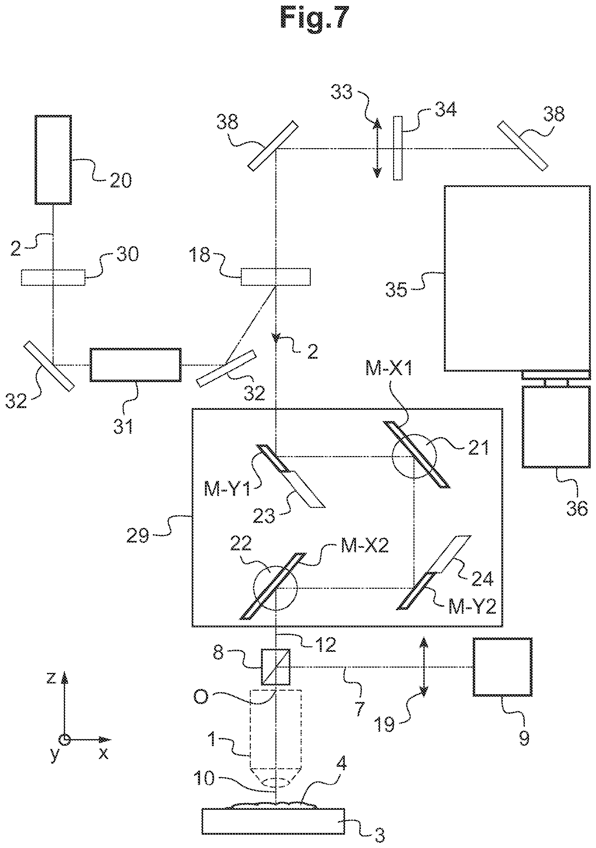

La figure 7 représente en vue de côté un appareil de microscopie comprenant un dispositif de balayage de faisceau laser suivant deux axes de balayage selon un exemple lié à la présente invention. L'appareil de microscopie à balayage de faisceau laser comporte une source laser 20, une roue à filtre 30, un système optique à miroirs 32 sur le trajet du faisceau laser, un expanseur de faisceau 31, un filtre d'injection-réjection 18. La source laser 2 émet un faisceau laser 2, comprenant une ou plusieurs longueurs d'onde. De façon avantageuse, la roue à filtre 30 permet de sélectionner une longueur d'onde particulière pour le faisceau d'excitation. L'appareil de microscopie comporte aussi un objectif de microscope 1 ayant une pupille d'entrée de centre O. Un porte-échantillon 3 supporte un échantillon 4 disposé dans le plan focal de l'objectif 1. De façon avantageuse, l'appareil de microscopie comprend une lentille de focalisation 33 et un trou confocal 34 disposé dans un plan optiquement conjugué avec le plan focal de l'objectif de microscope 1. L'appareil de la figure 7 comporte un spectromètre 35, un détecteur 36 et un autre système optique à miroirs 38 sur le trajet du faisceau de diffusion Raman. Enfin, l'appareil de la figure 7 comporte un système optique 19 et une caméra de visualisation 9. L'appareil de la figure 7 s'applique en particulier à la microspectrométrie Raman.

Plus particulièrement, l'appareil de microscopie comporte un dispositif optique 29 de déplacement angulaire ou de balayage du faisceau laser. Ce dispositif optique de balayage du faisceau 29 est placé entre le filtre d'injection-réjection 18 et l'objectif de microscope 1.

Le système optique de balayage du faisceau 29 à deux axes de balayage (X, Y) comporte un miroir plan M-Y1, un miroir plan M-X1, un miroir plan M-Y2 et un miroir plan M-X2 disposés en série sur le trajet optique du faisceau laser 2. Les miroirs M-X1, M-X2, M-Y1 et M-Y2 sont actionnés respectivement par des actionneurs 21, 22, 23 et 24. Comme décrit de manière détaillée ci-dessus, les mouvements de rotation combinés des miroirs M-X1 et M-X2 autour d'un axe parallèle à l'axe Y permettent de déplacer angulairement l'axe du faisceau laser par rotation autour d'un axe parallèle à l'axe Y et passant par le centre O de la pupille de l'objectif. De manière analogue, les mouvements de rotation combinés des miroirs M-Y1 et M-Y2 autour d'un axe parallèle à l'axe X permettent de déplacer angulairement l'axe du faisceau laser par rotation autour d'un axe parallèle à l'axe X et passant par le centre O de la pupille de l'objectif de microscope. Ainsi, le système optique à miroirs M-X1, M-X2, M-Y1, M-Y2 permet de déplacer angulairement le faisceau laser suivant une ou deux directions transverses sur une plus grande surface de l'échantillon sans vignettage du faisceau laser tout en restant centré sur la pupille de l'objectif de microscope.

Sur la figure 7, on utilise, à titre d'exemple un expanseur de faisceau 31. Un expanseur de faisceau est un système optique permettant de multiplier la taille d'un faisceau optique. Un expanseur de faisceau est par exemple formé d'un système optique afocal de grossissement supérieur à 1. On peut aussi utiliser deux expanseurs de faisceau disposés en série sur le trajet optique du faisceau source, en amont du système optique de balayage 29.

On rappelle les notions d'optique suivantes :

1) l'ouverture numérique (NA) d'un objectif, par exemple de microscope, dépend du diamètre de sa lentille et de la distance au foyer selon la formule suivante :

$$NA = n.\sin(\theta) = \frac{nD/2}{\sqrt{f^2 + D^2/4}} \qquad (III)$$

2) lorsqu'un laser entre dans un objectif de microscope 1, il se focalise en un point à la distance au foyer. La taille de ce point peut dépendre de trois facteurs : la taille du faisceau laser, le diamètre de la lentille de l'objectif et son ouverture numérique (NA).

Dans le cas où le faisceau du laser peut couvrir la totalité de l'ouverture de la lentille, c'est à dire lorsque le diamètre du faisceau est supérieur ou égal au diamètre de la lentille, la taille du faisceau au point focal dépend uniquement du diamètre de la lentille et de son ouverture numérique (NA). Dans ce cas, le diamètre minimum de la tache focale est défini par la formule d'Airy comme étant égal à :

$$( \, 0{,}51 \, * \, \lambda \, ) \, / \, NA \qquad (IV)$$

Par application de la formule (IV), dans le cas où le diamètre du faisceau laser est supérieur ou égal au diamètre de la lentille, plus le diamètre de la lentille est grand, plus la tache focale est petite.

Dans le cas où le diamètre du faisceau laser est inférieur au diamètre de la lentille, plus le diamètre du faisceau laser est grand, plus la tache focale est petite, avec pour limite la formule (IV). On peut aussi appliquer la formule (IV) en considérant que le diamètre effectif de la lentille est défini par le diamètre du faisceau laser.

L'effet d'un expanseur de faisceau 31 est d'agrandir le diamètre du faisceau laser sur la pupille d'entrée de l'objectif. La taille du faisceau dans le plan focal de l'objectif est déterminée par application de la limite par la diffraction. Donc, plus le diamètre du faisceau laser collimaté est grand sur la pupille d'entrée de l'objectif, et plus la dimension du faisceau dans le plan focal est petite. L'utilisation d'un expanseur de faisceau permet ainsi d'augmenter la résolution spatiale de l'appareil de microscopie et le rapport signal sur bruit du signal Raman pour un microscope confocal. En effet, plus la tache d'Airy est petite, plus on peut coupler de lumière dans un petit trou confocal. Dans les applications d'imagerie de résolution microscopique, il est ainsi possible de faire de l'imagerie plus rapidement.

On sélectionne le grossissement de l'expanseur de faisceau pour augmenter le diamètre du faisceau laser de manière à ce que le diamètre à $1/e^2$ du faisceau laser atteigne le diamètre de la pupille de l'objectif de microscope utilisé, ce qui correspond à un compromis entre résolution spatiale et signal sur bruit.

De façon avantageuse, on utilise différents types d'expanseurs de faisceau : un expanseur de faisceau à grossissement fixe et un expanseur de faisceau à grossissement variable. Par exemple, deux expanseurs étant disposés en série sur le trajet du faisceau incident 2, le premier expanseur de faisceau a un grossissement fixe égal à x2 et le deuxième expanseur de faisceau à grossissement variable a un grossissement variable de x1 à x4,5.

Par exemple, un objectif 10X a un diamètre de 9mm, un objectif 50X a un diamètre de 5,4mm et un objectif 100X a un diamètre de 3,24mm.

Un expanseur de faisceau à grossissement variable permet d'ajuster le diamètre du faisceau laser en fonction du diamètre de la pupille de l'objectif de microscope utilisé, dans un appareil de microscopie ayant plusieurs objectifs de microscope.

De façon avantageuse, l'expanseur de faisceau à grossissement variable est du type achromatique dans le domaine du visible (400-700nm). De préférence, l'expanseur de faisceau à grossissement variable 31 est motorisé. Avantageusement, un miroir d'auto-alignement, disposé sur le chemin optique juste après l'expanseur de faisceau, permet de corriger l'erreur de pointé d'un expanseur de faisceau à grossissement variable.

On peut mesurer le diamètre du faisceau laser émis par la source laser, par exemple au moyen d'une caméra de la marque Gentec « Laser Beam Imager » et de son logiciel de traitement. On mesure les dimensions transverses du faisceau laser par la méthode dite 4Sigma, sans l'expanseur de faisceau : 1183$\mu$m suivant l'axe X et 1261 $\mu$m suivant l'axe Y.

On mesure ensuite par la même méthode, le diamètre du faisceau laser en sortie de l'expanseur de faisceau à grossissement variable, le grossissement étant réglé au maximum (X4,5) selon les données du fabricant. On mesure les dimensions transverses du faisceau laser en sortie de l'expanseur de faisceau : 5494 $\mu$m suivant l'axe X et 5346$\mu$m suivant l'axe Y. Ces mesures correspondent à une multiplication moyenne de 4,44 fois, qui est cohérente avec la valeur indiquée par le constructeur, qui est de 4,5.

L'utilisation d'un expanseur de faisceau est particulièrement aisée dans un appareil de microscopie de type confocal, où l'expanseur de faisceau 31 peut être inséré directement dans le tube confocal du microscope sans autre adaptation optique, l'expanseur de faisceau étant disposé sur le trajet laser uniquement ou sur le trajet commun laser-signal Raman.

La combinaison d'un expanseur de faisceau 31 et d'un système de balayage de faisceau 29 par pivotement autour du centre de la pupille de l'objectif de microscope permet de bénéficier des avantages conjugués pour augmenter la largeur de la zone de déplacement angulaire du faisceau sur l'échantillon tout en augmentant la résolution spatiale du faisceau laser au point de focalisation. Cette combinaison permet ainsi de résoudre les deux principales limitations du système de balayage de faisceau laser de l'art antérieur.

Un appareil de microscopie à balayage de faisceau laser selon un exemple lié à la présente nvention est avantageusement utilisé dans une application à la microspectrométrie Raman.

Dans cette application, on dispose le système de déplacement angulaire de faisceau, sur le trajet optique du faisceau laser d'excitation, de préférence entre un filtre d'injection-réjection et l'objectif de microscope. Sur le faisceau d'excitation le filtre d'injection-réjection 18 dirige le faisceau laser incident 2 vers le système de balayage à miroirs 29 en direction de l'objectif de microscope 1. Le système de balayage à miroirs 29, par exemple M-X1, M-Y1, M-X2, M-Y2, permet de déplacer angulairement le faisceau laser sur l'échantillon 4 suivant un ou deux axes de balayages. Dans une configuration de rétrodiffusion, l'objectif de microscope 1 collecte le faisceau rétrodiffusé qui comporte la diffusion Rayleigh à la longueur d'onde du faisceau laser incident, et le faisceau de diffusion Raman, qui est décalé en longueur d'onde. Le faisceau collecté par l'objectif de microscope 1 est transmis au système de balayage à miroirs 29 (M-X1, M-Y1, M-X2, M-Y2), puis au filtre d'injection-réjection 18. Par construction, le faisceau de rétrodiffusion suit le chemin optique inverse du faisceau laser incident et ressort donc du système de balayage à miroirs exactement dans la direction du faisceau laser incident, cette direction restant fixe quelle que soit l'angle d'inclinaison du faisceau de balayage sur l'objectif de microscope. Avantageusement, le filtre d'injection-réjection 18 sépare spatialement le faisceau de diffusion Rayleigh du faisceau de diffusion Raman. Un sysytème optique à miroirs 38 dirigé ensuite le faisceau de diffusion Raman vers un spectromètre Raman 35 qui sépare spectralement le faisceau de diffusion Raman en direction d'un détecteur 36 afin de détecter et d'analyser le signal de rétrodiffusion Raman.

Cet appareil de microspectrométrie Raman permet d'analyser une surface de l'échantillon plus grande, tout en améliorant le rapport signal sur bruit et la résolution spatiale du faisceau d'excitation laser sur l'échantillon.

Dans l'appareil de la figure 7 qui comporte un filtre 18 d'injection-réjection (de type notch, edge, beam splitter, ou filtres d'épifluoresence) et un trou confocal 34, les miroirs de balayage sont disposés sur le trajet confocal ce qui permet de rester en configuration de microscope confocal. Un autre expanseur de faisceau (beam expander) peut être inséré sur le trajet confocal pour bien couvrir la pupille d'objectif.

L'appareil de la figure 7 comporte en outre une caméra 9, munie d'une lentille de focalisation 19. Un séparateur de faisceau 8, par exemple un cube séparateur, est disposé sur le trajet optique du faisceau laser entre le système optique à miroirs 29 et l'objectif de microscope 1. Ce séparateur de faisceau 8 permet de diriger un faisceau 7 formé par réflexion et/ou diffusion sur l'échantillon 4 vers la caméra de manière à former une image de la surface de l'échantillon et/ou du faisceau laser. De façon avantageuse, l'appareil comporte aussi une source de lumière blanche (non représentée), le faisceau de lumière blanche étant inséré sur l'axe optique du microscope, par exemple entre le séparateur de faisceau 8 et l'objectif du microscope 1, de manière à éclairer le champ objet de l'échantillon 4 en lumière blanche. Cet éclairage en lumière blanche permet, par réflexion et/ou diffusion, une meilleure visualisation de l'échantillon 4 via la caméra 9. De cette manière, la caméra 9 permet de visualiser simultanément l'échantillon et la position du faisceau laser au cours de son déplacement angulaire dans le champ optique de la caméra. Avantageusement, le grossissement de l'objectif de la caméra est sélectionné de manière à permettre la visualisation de toute la zone de déplacement angulaire du faisceau laser et/ou de tout le champ optique de l'objectif de microscope. Dans une variante, l'objectif de la caméra est un objectif de focale variable.

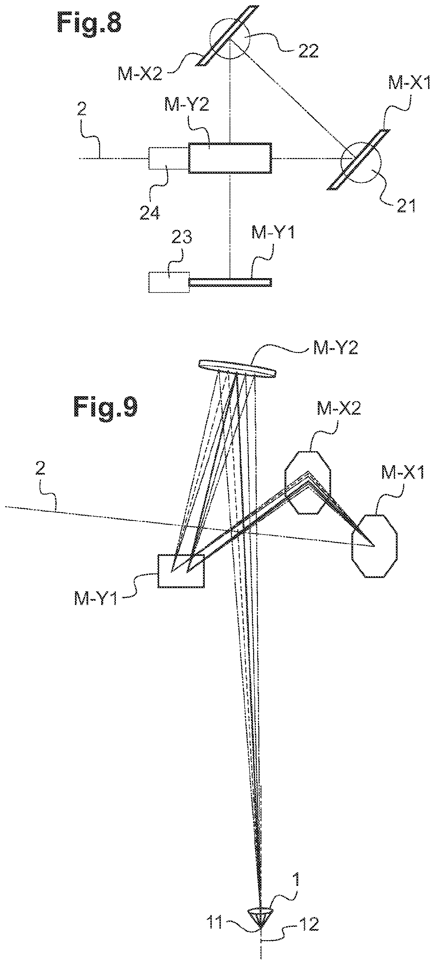

La figure 8 représente en vue de dessus un système optique de balayage de faisceau à deux axes suivant une première variante du deuxième mode de réalisation de l'invention. Dans cette variante, le faisceau laser incident 2 est dirigé et réfléchi successivement par le premier miroir M-X1, le deuxième miroir M-X2, le troisième miroir M-Y1 puis le quatrième miroir M-Y2, l'axe du faisceau réfléchi par le quatrième miroir M-Y2 étant perpendiculaire au plan de la figure 8. La figure 9 représente, par un schéma de tracé de rayons, le système optique à deux axes de balayage de la figure 8. Cet arrangement de miroirs permet, à partir d'un faisceau laser source horizontal, de former un faisceau laser de balayage ayant un axe 12 proche de l'axe 10 de l'objectif de microscope 1, cet axe optique 10 étant générallement vertical. L'avantage de cette variante est d'être très compacte et d'éviter l'ajout d'un miroir plan de renvoi supplémentaire.

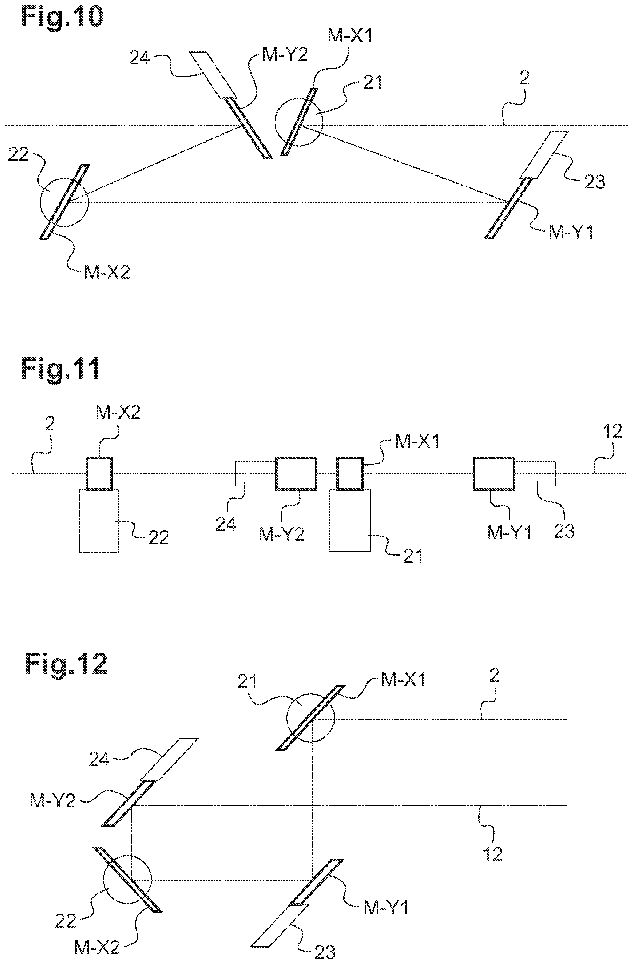

Les figures 10 et 11 illustrent respectivement en vue de dessus et en vue de côté une deuxième variante de configuration des miroirs dans un système à deux axes de balayage de faisceau laser selon le deuxième mode de réalisation de l'invention. Dans cette variante, le faisceau laser incident 2 est réfléchi successivement par le miroir plan M-X1, le miroir plan M-Y1, le miroir plan M-X2 et le miroir plan M-Y2. L'angle d'incidence du faisceau laser 2 sur le premier miroir M-X1 est choisi de manière à être inférieur à environ 45 degrés et de préférence inférieur à 22,5 degrés par rapport à la normale à la surface du miroir M-X1. De façon avantageuse, les angles d'incidence sur les autres miroirs M-Y1, M-X2 et M-Y2 sont aussi choisis pour être les plus faibles possibles, de manière à augmenter la surface apparente des miroirs. De plus, limiter l'angle d'incidence permet de réduire le diamètre apparent ou l'étalement du faisceau laser sur chacun des miroirs M-X1, M-Y1, M-X2 et M-Y2. Cette variante permet ainsi d'utiliser un faisceau laser incident 2 de diamètre plus large, ce qui permet notamment d'améliorer la résolution spatiale du microscope à balayage. Cette variante à angle fermé permet aussi de réduire l'effet d'anamorphose dû à l'inclinaison du miroir. En effet, un miroir incliné de 45 degrés scannant angulairement symétriquement selon les deux axes produit une figure rectangulaire de ratio en racine carrée de 2 entre les deux axes. Ceci s'applique en particulier à des miroirs à deux axes avec actionneur de type à bobine acoustique (voice coil).

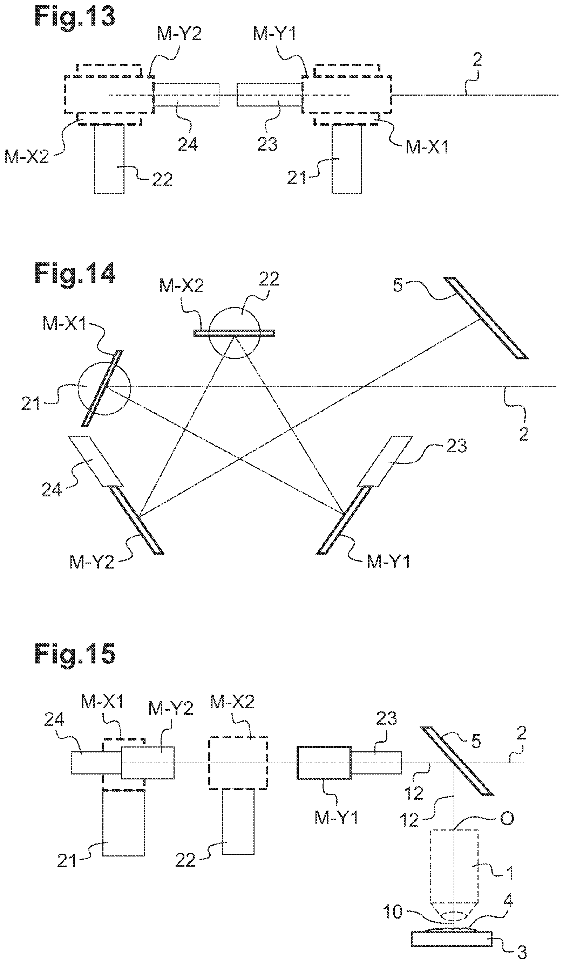

Les figures 12 et 13 illustrent respectivement en vue de dessus et en vue de côté une troisième variante de configuration des miroirs dans un système à deux axes de balayage de faisceau laser selon le deuxième mode de réalisation de l'invention. Dans cette variante, le faisceau laser incident 2 est réfléchi successivement par le miroir plan M-X1, le miroir plan M-Y1, le miroir plan M-X2 et le miroir plan M-Y2, l'axe 12 du faisceau de balayage étant situé dans une direction globalement parallèle à la direction du faisceau incident 2. Cette variante permet de replier le faisceau de balayage laser et ainsi de réduire l'encombrement du système optique de balayage de faisceau.

Les figures 14 et 15 illustrent respectivement en vue de dessus et en vue de côté une quatrième variante de configuration des miroirs dans un système à deux axes de balayage de faisceau laser selon le deuxième mode de réalisation de l'invention. Dans cette variante, le faisceau laser incident 2 est réfléchi successivement par le miroir plan M-X1, le miroir plan M-Y1, le miroir plan M-X2, le miroir plan M-Y2 et un miroir plan 5 de renvoi pour diriger le faisceau vers l'objectif de microscope 1. Cette variante permet à la fois un gain de place par repliement du faisceau de balayage laser et une réduction de l'angle d'incidence du faisceau sur les miroirs qui permet de réduire l'étalement et/ou d'augmenter le diamètre du faisceau laser.

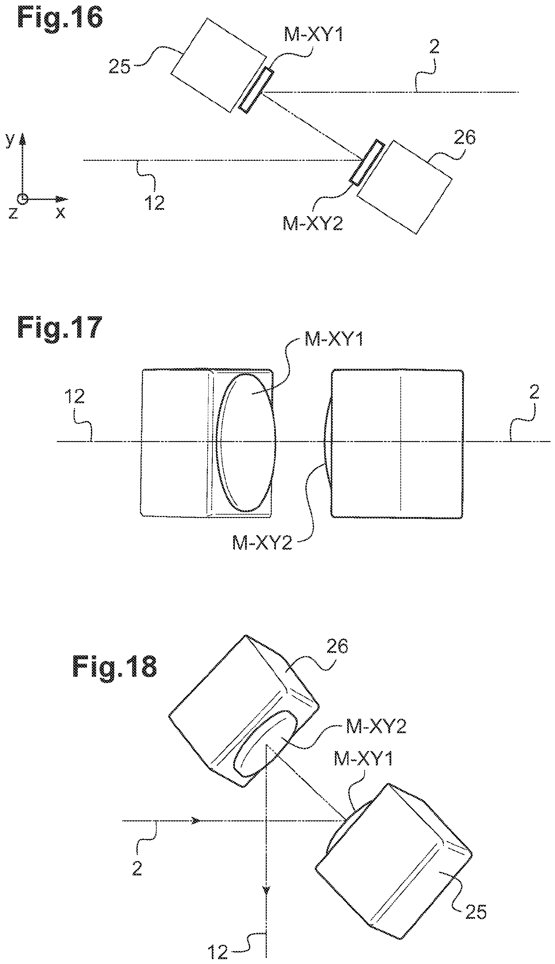

Les figures 16 à 18 représentent un système de balayage de faisceau laser suivant deux axes de balayage selon un mode de réalisation de l'invention. La figure 16 est une vue de dessus, la figure 17 une vue de côté d'une première variante du mode de réalisation. La figure 18 une vue en perspective d'une deuxième variante du mode de réalisation.

Dans ce mode de réalisation, on utilise un premier miroir plan M-XY1 et un deuxième miroir plan M-XY2. Le premier miroir M-XY1 est monté sur un actionneur 25 à deux axes de rotation, par exemple de type piézoélectrique ou une bobine acoustique (Moving coil ou Voice Coil). Ainsi, le premier actionneur 25 permet d'effectuer une rotation autour d'un axe X et/ou autour d'un axe Y. De préférence, l'axe de rotation du premier actionneur 25 autour de l'axe X et l'axe de rotation de ce premier actionneur 25 autour de l'axe Y se croisent en un point situé au voisinage de la surface du premier miroir M-XY1. De même, le deuxième miroir plan M-XY2 est monté sur un actionneur 26 à deux axes de rotation, par exemple de type piézoélectrique ou une bobine acoustique, l'actionneur 26 permettant d'effectuer une rotation autour d'un axe X et/ou autour d'un axe Y. De préférence, l'axe de rotation du deuxième actionneur 26 autour de l'axe X et l'axe de rotation de ce deuxième actionneur 26 autour de l'axe Y se croisent en un autre point situé au voisinage de la surface du deuxième miroir M-XY2. Les mouvements de rotation autour de chaque axe sont combinés entre le premier actionneur et le deuxième actionneur de manière à ce que le faisceau réfléchi sur les deux miroirs M-XY1 et M-XY2 pivote autour d'un point aligné sur le centre O de la pupille de l'objectif de microscope. Cette configuration permet de réduire le nombre de miroirs à seulement deux miroirs, au lieu de quatre comme dans les exemples décrits précédemment. La réduction du nombre de miroirs permet d'amener plus de lumière laser sur l'échantillon et de collecter plus de lumière Raman diffusée, donc d'obtenir une image plus rapidement. De plus, ce mode de réalisation permet d'utiliser des miroirs de plus grande dimension, ce qui permet un déplacement angulaire du faisceau laser de plus grande amplitude et une meilleure résolution spatiale en X, en Y et/ou en Z. Enfin, ce mode de réalisation permet d'utiliser des miroirs plus épais, par exemple des miroirs diélectriques, qui présentent une meilleure efficacité.

Par comparaison, dans un système de balayage de faisceau antérieur, dit duoscan, dans lequel les miroirs sont de petite dimension, et sont montés de manière à être amovibles pour permettre de collecter plus de flux Raman et de ne pas vignetter le champ de la caméra de visualisation. Au contraire, avec le système de l'invention, les miroirs ne limitent ni la collection du signal Raman ni le champ de l'image de la caméra de visualisation, et n'ont pas besoin d'être montés sur des supports amovibles. Le montage est ainsi simplifié.

Dans la première variante illustrée sur les figures 16-17, l'axe du faisceau laser 2 incident est globalement parallèle à l'axe 12 du faisceau de balayage laser en sortie du système optique à miroirs.

Dans la deuxième variante illustrée sur la figure 18, l'axe du faisceau laser 2 incident est globalement transverse à l'axe 12 du faisceau de balayage laser en sortie du système optique à miroirs.

Un avantage de ce mode de réalisation est de réduire le nombre de miroirs utilisés à deux au lieu de quatre dans les précédents exemples, ce qui réduit les pertes d'intensité sur le faisceau de balayage laser et sur le signal collecté. Il en découle la possibilité d'utiliser des miroirs M-XY1 et M-XY2 plus grands que les miroirs M-X1, M-X2, M-Y1 et M-Y2 utilisés dans les modes de réalisation décrits en lien avec les figures 8-15.

Un autre avantage de ce mode de réalisation est de présenter un encombrement extrêmement réduit.

De façon particulièrement avantageuse, les miroirs M-X1, M-Y1, M-X2, M-Y2, M-XY1 et M-XY2 sont de type diélectrique, le traitement diélectrique étant adapté pour augmenter l'efficacité en réflexion. De préférence, les miroirs diélectriques sont à large bande spectrale (par exemple 325nm -1100nm, ou 325-1700, ou encore 325-2200nm), ce qui permet d'utiliser les mêmes miroirs pour tout le spectre de l'ultraviolet (UV) au proche infrarouge (NIR).

Le système et le procédé de balayage d'un faisceau laser peuvent être combinés à différents composants pour apporter des avantages supplémentaires.

Toutefois, à haute vitesse de balayage (de l'ordre de 30Hz pour un actionneur ou scanner de type voice coil), les différents scanners peuvent subir un déphasage non maitrisé, le recentrage sur le centre O de la pupille de l'objectif ne fonctionne plus et le balayage laser est alors irrégulier, vignetté. Un moyen pour corriger ce défaut tout en fonctionnant à une plus haute vitesse de balayage (i.e. jusque quelques centaines de Hz) est de mettre en place une boucle à verrouillage de phase en utilisant les signaux des capteurs de position du premier miroir (par exemple M-X1 ou M-XY1) généralement fournis avec chaque scanner, afin d'asservir la phase du signal de commande du deuxième miroir (M-X2 ou M-XY2), et ceci pour chaque axe de balayage.

De façon particulièrement avantageuse, le signal de diffusion Raman est intégré sur plusieurs points de mesure pendant le déplacement angulaire du faisceau, de manière à enregistrer un signal Raman moyenné sur plusieurs points, comme décrit dans le document de brevet WO002008128971A2. L'utilisation du balayage à un ou deux axes suivant un mode de réalisation de la présente invention permet d'étendre la zone de balayage sur l'échantillon et/ou d'accroître la résolution spatiale des mesures de microspectrométrie Raman et/ou d'augmenter le rapport signal à bruit des mesures de microspectrométrie Raman.

Dans le cas où on utilise un expanseur de faisceau dans un appareil de microspectrométrie Raman à balayage de faisceau laser, l'expanseur de faisceau est disposé sur le trajet du faisceau laser d'excitation, mais en dehors du trajet optique du faisceau de diffusion Raman. Avantageusement, l'expanseur de faisceau est disposé entre la source laser et un filtre séparateur, par exemple de type filtre d'injection-réjection ou notch filter.

Le système de balayage de faisceau est compatible avec différents objectifs de microscope. En particulier, il est possible d'utiliser un objectif de microscope à miroir, par exemple un objectif de type Cassegrain ou Schwartzfield. Un objectif à miroir a l'avantage d'être achromatique, ce qui permet des mesures de spectrométrie de meilleure précision. Il est ainsi plus facile de séparer un faisceau laser d'excitation et un faisceau de diffusion Raman. D'autre part, en microscopie, l'achomatisme de l'objectif de microscope assure une détection axiale au même point que l'excitation laser, ce qui est important en particulier dans le cas d'un échantillon transparent.

Le balayage à deux axes permet de mieux coupler la lumière laser à un objectif de type Cassegrain car on peut éclairer le bord du miroir primaire et pas le centre. En effet, les rayons lasers passant au centre du miroir primaire sont rétroréfléchis et n'atteignent pas l'échantillon à analyser, d'où des pertes importantes. La présente invention permet donc avantageusement d'amener plus de lumière laser à l'échantillon en utilisant un objectif de type Cassegrain ou Schwartzfield.

Le dispositif de balayage de l'invention peut aussi être combiné de façon avantageuse à un système de lentilles coniques, tel que décrit par exemple dans le document de brevet WO/2013/014379A, pour former un faisceau laser conique ou cylindrique. De préférence, l'ouverture du faisceau conique ou cylindrique est suffisante pour couvrir la pupille de l'objectif et ainsi permettre d'augmenter l'intensité du faisceau de sortie. Ce dispositif peut aussi remplacer un système de lentilles coniques, tel que décrit dans le document FR1156687 pour former à l'aide d'un balayage rapide un faisceau laser cylindrique creux de section quelconque (par exemple annulaire ou autre) qui présente pas ou très peu de lumière sur l'axe du cylindre. Ceci présente l'avantage en particulier de supprimer les rayons centraux et de n'éclairer l'échantillon qu'avec des rayons inclinés hors d'axe. Ce type d'éclairage permet de réduire fortement la contribution du substrat au signal Raman confocal. Ce type d'éclairage permet aussi de réduire fortement l'aberration optique nommée aberration sphérique longitudinale, qui apparaît lors de la réfraction dans un milieu d'indice et qui induit une dégradation de la résolution spatiale d'un microscope confocal.

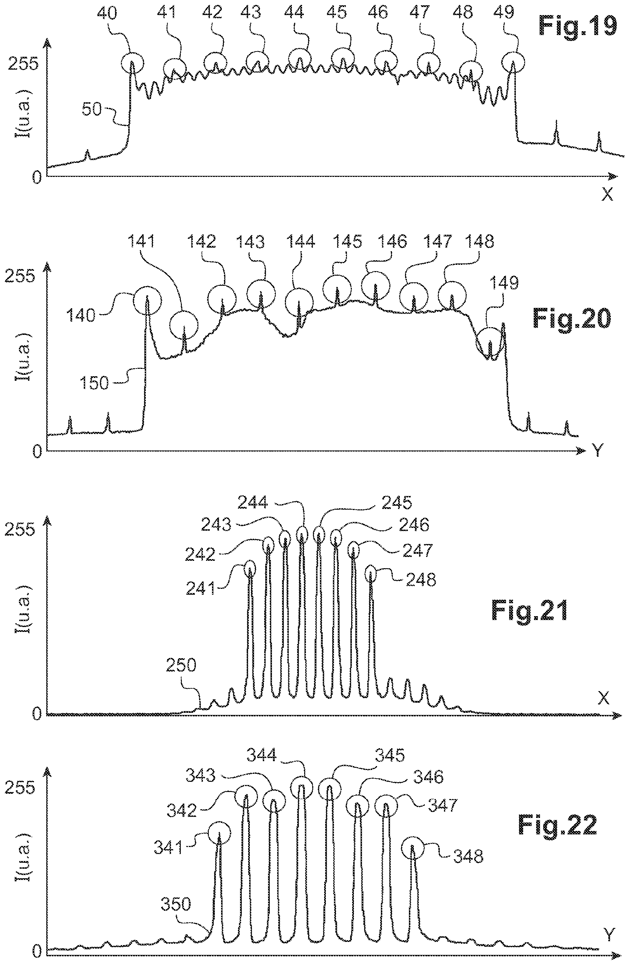

Les figures 19-22 représentent différentes mesures de largeur de balayage obtenues avec un appareil de microscopie à balayage laser selon l'exemple décrit en lien avec la figure 7.

On dispose à la place de l'échantillon 4 une mire de calibration certifiée par l'UKAS (United Kingdom Accreditation Service) conformément aux exigences du NIST (National Institute of Standards and Technology). Cette mire comporte une échelle de 20mm le long avec des graduations espacées de 0,01mm. La mire permet de mesurer le déplacement maximum du faisceau dans le plan focal de l'objectif de microscope lors d'un balayage suivant un axe parallèle à l'axe de la mire.

Pour mesurer la zone de déplacement dans un appareil de microscopie à balayage suivant deux axes, on mesure successivement le déplacement maximum en orientant la mire suivant l'axe X puis suivant l'axe Y.

La figure 19 illustre une mesure de la mire à échelle sur un appareil de microscopie à balayage de faisceau équipé d'un objectif de microscope 10X lors d'un balayage suivant un axe parallèle à l'axe X, la mire étant orientée parallèlement à l'axe X. Plus précisément, la courbe 50 représente la mesure de l'intensité du signal réfléchi à la longueur d'onde du laser suivant un déplacement angulaire du faisceau le long de l'axe X sur la mire. Les maxima locaux entourés 40, 41, ... 49 sur la figure 19 correspondent à une réflexion du laser sur une barre de l'échelle de la mire. On observe que les maxima 40, 41, ... 49 sont espacés de 50μm. La largeur de balayage du faisceau sur la mire suivant l'axe X correspond à la distance entre le premier maximum 40 et le dernier maximum 49, soit environ 450 microns. De plus, le niveau moyen de la courbe 50 est représentatif de l'homogénéité du système optique. Plus le niveau moyen est élevé et constant, meilleure est la mesure.

La figure 20 illustre une mesure de la même mire sur le même appareil de microscopie avec le même objectif de microscope 10X lors d'un balayage suivant un axe parallèle à l'axe Y la mire étant orientée parallèlement à l'axe Y. La courbe 150 représente la mesure de l'intensité du signal réfléchi à la longueur d'onde du laser suivant un déplacement angulaire du faisceau le long de l'axe Y sur la mire. Les maxima locaux entourés 140, 141, ... 149 sur la figure 20 correspondent à une réflexion du laser sur une barre de l'échelle de la mire. On vérifie que les maxima 140, 141, ... 149 sont espacés de 50μm. La largeur de balayage du faisceau sur la mire suivant l'axe Y correspond à la distance entre le premier maximum 140 et le dernier maximum 149, soit environ 450 microns.

Des captures d'écran sur une caméra de visualisation permettent de confirmer que la largeur du balayage suivant l'axe X est d'environ 460μm et la largeur du balayage suivant l'axe Y d'environ 470μm.

Par comparaison avec une largeur de balayage d'environ 200 microns obtenue avec un appareil Duoscan de l'art antérieur équipé d'un objectif 10X, le système de balayage de l'invention permet donc d'augmenter la largeur de champ d'un facteur environ 2,2 fois supérieur dans chaque direction X, Y, et donc d'augmenter la surface balayée d'un facteur environ 4,9.

La figure 21 illustre une mesure de la même mire à échelle sur un appareil de microscopie à balayage de faisceau équipé d'un objectif de microscope 50X lors d'un balayage suivant un axe parallèle à l'axe X, la mire étant orientée parallèlement à l'axe X. Les maxima locaux entourés 240, 241, ... 248 sur la courbe 250 de la figure 21 correspondent à une réflexion du laser sur une barre de l'échelle de la mire. On observe que les maxima 241, ... 248 sont espacés d'environ 10 μm. La largeur de balayage du faisceau sur la mire suivant l'axe X correspond à la distance entre le premier maximum 241 et le dernier maximum 248, soit environ 70 microns.

La figure 22 illustre une mesure de la même mire sur le même appareil de microscopie avec le même objectif de microscope 50X lors d'un balayage suivant un axe parallèle à l'axe Y la mire étant orientée parallèlement à l'axe Y. Les maxima locaux entourés 341, 342 ... 348 sur la courbe 350 de la figure 22 correspondent à une réflexion du laser sur une barre de l'échelle de la mire. On observe que les maxima 341, 342 ... 348 sont espacés d'environ 10 μm. La largeur de balayage du faisceau sur la mire suivant l'axe Y correspond à la distance entre le premier maximum 341 et le dernier maximum 348, soit environ 70 microns.

Des captures d'écran sur une caméra de visualisation permettent de confirmer que la largeur du balayage avec l'objectif 50X suivant l'axe X est d'environ 70μm et la largeur du balayage suivant l'axe Y d'environ 70μm.

Par comparaison avec une largeur de balayage obtenue avec un appareil Duoscan de l'art antérieur équipé d'un objectif 50X, le système de balayage de l'invention permet donc d'augmenter la largeur de champ d'un facteur environ 2,7 fois supérieur dans chaque direction X, Y, et donc d'augmenter la surface balayée d'un facteur environ 7,6.

De manière alternative, on utilise au lieu d'une mire à échelle à une dimension, une mire plane à deux dimensions composée de carrés de 0,5*0,5mm composés eux-mêmes de carrés de 0,01*0,01 mm. Cette mire carrée est utilisée pour former une image de la surface balayée par réflexion. L'image permet de visualiser les carrés de la mire et d'observer le balayage du faisceau laser sur la mire. De façon avantageuse, la mire carrée est éclairée en lumière blanche pour permettre d'en faire une image quelle que soit la position du faisceau laser.

Avec un objectif 10X, on estime que l'étendue du déplacement de faisceau est d'environ 440μm*450μm. Un assombrissement de l'image sur les bords du balayage est dû au vignettage sur les bords des miroirs montés sur les scanners, l'intensité du faisceau diminuant lorsque le faisceau atteint le bord d'un miroir ou le bord de la pupille de l'objectif.

Pour un objectif 50X, on observe avec la mire carrée, que la zone de balayage utilisable est d'environ 80*75μm.


## Revendications

1. Appareil de microscopie à balayage de faisceau optique comprenant :

   - au moins une source de lumière (20) adaptée pour émettre un faisceau optique (2) ;
   - un objectif de microscope (1) ayant une pupille d'entrée, l'objectif de microscope (1) étant disposé suivant un axe optique longitudinal (10) de l'appareil de microscopie, la pupille ayant un centre (O) sur l'axe optique longitudinal (10) et l'objectif de microscope (1) étant adapté pour focaliser ledit faisceau optique (2) dans un plan objet (11) transverse à l'axe optique longitudinal (10) ;
   - des moyens de déplacement angulaire du faisceau optique (2) suivant deux directions spatiales transverses (X, Y) dans le plan objet (11)

**caractérisé en ce que** lesdits moyens de déplacement angulaire du faisceau optique (2) sont constitués :

- d'un premier miroir (M-XY1) et d'un deuxième miroir (M-XY2) disposés en série sur le trajet optique du faisceau optique (2) entre la source de lumière (20) et l'objectif de microscope (1),
- le premier miroir (M-XY1) étant monté sur un actionneur (25) à deux axes de rotation, l'actionneur (25) étant adapté pour incliner le premier miroir (M-XY1) suivant un premier angle de rotation (RX1) prédéterminé autour d'un premier axe de rotation (X) et pour incliner le premier miroir (M-XY1) suivant un troisième angle de rotation (RY3) prédéterminé autour d'un axe de rotation transverse (Y), et
- le deuxième miroir (M-XY2) étant monté sur un actionneur (26) à deux axes de rotation adapté pour incliner le deuxième miroir (M-XY2) suivant un deuxième angle de rotation (RX2) prédéterminé en fonction dudit premier angle de rotation (RX1) autour d'un axe parallèle au premier axe de rotation (X) et pour incliner le deuxième miroir (M-XY2) suivant un quatrième angle de rotation (RY4) prédéterminé en fonction dudit troisième angle de rotation (RY3) autour d'un axe parallèle à l'axe de rotation transverse (Y), de manière à incliner angulairement l'axe (12) du faisceau optique (2) par pivotement autour du centre (O) de la pupille de l'objectif de microscope (1), ledit faisceau optique (2) restant centré sur le centre (O) de la pupille de l'objectif de microscope (1) dans une gamme d'angles d'inclinaison de l'axe (12) du faisceau optique (2) par rapport à l'axe optique longitudinal (10), de manière à déplacer le faisceau optique suivant les deux directions spatiales transverses (X, Y) dans le plan objet (11).

2. Appareil de microscopie à balayage optique selon la revendication 1 dans lequel l'actionneur (25) à deux axes de rotation du premier miroir (M-XY1) est de type piézoélectrique ou bobine acoustique, et/ou dans lequel l'actionneur (26) à deux axes de rotation du deuxième miroir (M-XY2) est de type piézoélectrique ou bobine acoustique.

3. Appareil de microscopie à balayage de faisceau optique selon l'une des revendications 1 ou 2 dans lequel l'actionneur (25) du premier miroir (M-XY1) comporte un capteur de position fournissant un signal de position et dans lequel l'actionneur (26) du deuxième miroir (M-XY2) comporte un capteur de position, l'appareil comportant un système de boucle de verrouillage de phase adapté pour asservir un signal de commande de l'actionneur (26) ju deuxième miroir (M-XY2) en fonction du signal de position de l'actionneur (25) du premier miroir (M-XY1).

4. Appareil de microscopie à balayage de faisceau optique selon l'une des revendications 1 à 3 dans lequel le deuxième angle de rotation (RX2) est fonction du premier angle de rotation (RX1), de la distance B entre le premier miroir (M-XY1) et le deuxième miroir (M-XY2) et de la distance A entre le deuxième miroir (M-XY2) et le centre (O) de la pupille d'entrée de l'objectif de microscope (1).

5. Appareil de microscopie à balayage de faisceau optique selon l'une des revendications 1 à 4 dans lequel ladite au moins une source de lumière (20) comprend une ou plusieurs sources de type source laser et/ou diode électroluminescente.

6. Appareil de microscopie à balayage de faisceau optique selon l'une des revendications 1 à 5, comprenant en outre un expanseur de faisceau (31) disposé entre la source de lumière (20) et l'objectif de microscope (1), l'expanseur de faisceau (31) ayant un grossissement fixe et/ou variable.

7. Appareil de microscopie à balayage de faisceau optique selon l'une des revendications 1 à 6 comprenant en outre une caméra (9) de visualisation adaptée pour former une image du plan objet (11) de l'objectif de microscope et/ou pour visualiser une zone d'un échantillon scannée par balayage de faisceau optique.

8. Appareil de microscopie à balayage de faisceau optique laser selon l'une des revendications 1 à 7, dans lequel l'appareil de microscopie comporte un trou confocal (34) disposé dans un plan optiquement conjugué avec le plan objet (11) et comprenant des moyens de collimation du faisceau optique (2) disposés entre la au moins une source de lumière et l'objectif de microscope pour former un faisceau optique collimaté, le premier miroir (M-XY1) et le deuxième miroir (M-XY2) étant disposés en série sur le trajet optique du faisceau optique collimaté.

9. Appareil de microscopie à balayage de faisceau optique selon l'une des revendications 1 à 8 dans lequel l'appareil de microscopie est combiné à un spectromètre Raman, un spectromètre Raman cohérent anti-Stokes, un spectromètre de fluorescence, un spectromètre de photoluminescence, ou un spectromètre de cathodoluminescence adapté pour mesurer et analyser un signal par réflexion, transmission et/ou diffusion du faisceau optique (2) sur l'échantillon en fonction d'un déplacement angulaire du faisceau optique.

**10.** Procédé de microscopie à balayage de faisceau optique comprenant les étapes suivantes :

- émission d'un faisceau optique (2) au moyen d'une source de lumière ;
- réflexion optique dudit faisceau laser (2) sur un premier miroir (M-XY1) puis sur un deuxième miroir (M-XY2) disposés en série sur le trajet optique du faisceau laser (2) entre la source de lumière et un objectif de microscope (1),
- inclinaison du premier miroir (M-XY1) suivant un premier angle de rotation (RX1) prédéterminé autour d'un premier axe de rotation (X) et suivant un troisième angle de rotation (RY1) prédéterminé autour d'un axe de rotation transverse (Y),
- inclinaison du deuxième miroir (M-X2, M-XY2) suivant un deuxième angle de rotation (RX2) prédéterminé en fonction du premier angle de rotation (RX1) autour d'un axe parallèle au premier axe de rotation (X), et suivant un quatrième angle de rotation (RY2) prédéterminé en fonction du troisième angle de rotation (RY1) autour d'un axe parallèle à l'axe de rotation transverse (Y), de manière à incliner angulairement l'axe (12) du faisceau optique (2) par pivotement autour du centre (O) de la pupille de l'objectif de microscope (1), dans une gamme d'angles d'inclinaison de l'axe (12) du faisceau optique (2) par rapport à un axe optique longitudinal (10) ; et
- focalisation dudit faisceau optique (2) dans un plan objet (11) au moyen dudit objectif de microscope (1), de manière à déplacer ledit faisceau optique (2) suivant une direction spatiale (X) dans le plan objet (11) et suivant une autre direction spatiale (Y) dans le plan objet (11).

**Patentansprüche**

**1.** Mikroskopiegerät mit Abtastung durch einen optischen Strahl mit

- wenigstens einer zum Aussenden eines optischen Strahls (2) ausgelegten Lichtquelle (20),
- einem Mikroskopobjektiv (1) mit einer Eingangspupille, wobei das Mikroskopobjektiv (1) gemäß einer optischen Längsachse (10) des Mikroskopiegeräts angeordnet ist, wobei die Pupille auf der optischen Längsachse (10) eine Mitte (O) aufweist und das Mikroskopobjektiv (1) dazu ausgelegt ist, den optischen Strahl (2) in einer zur optischen Längsachse (10) quer verlaufenden Objektebene (11) zu fokalisieren,
- Mitteln zum winkelmäßigen Verlagern des optischen Strahls (2) in zwei quer verlaufenden Raumrichtungen (X, Y) in der Objektebene (11),

**dadurch gekennzeichnet, daß** die Mittel zum winkelmäßigen Verlagern des optischen Strahls (2) aus

- einem ersten Spiegel (M-XY1) und einem zweiten Spiegel (M-XY2), die in Reihe auf dem optischen Weg des optischen Strahls (2) zwischen der Lichtquelle (20) und dem Mikroskopobjektiv (1) angeordnet sind, bestehen,
- wobei der erste Spiegel (M-XY1) auf einem Betätigungsmittel (25) mit zwei Drehachsen angebracht ist, wobei das Betätigungsmittel (25) dazu ausgelegt ist, den ersten Spiegel (M-XY1) um einen vorbestimmten ersten Drehwinkel (RX1) um eine erste Drehachse (X) zu neigen und um den ersten Spiegel (M-XY1) um einen vorbestimmten dritten Drehwinkel (RY3) um eine Querdrehachse (Y) zu neigen, und
- wobei der zweite Spiegel (M-XY2) auf einem Betätigungsmittel (26) mit zwei Drehachsen angebracht ist, das dazu ausgelegt ist, den zweiten Spiegel (M-XY2) um einen vorbestimmten zweiten Drehwinkel (RX2) in Abhängigkeit vom ersten Drehwinkel (RX1) um eine zur ersten Drehachse (X) parallele Achse zu neigen und um den zweiten Spiegel (M-XY2) um einen vorbestimmten vierten Drehwinkel (RY4) in Abhängigkeit vom dritten Drehwinkel (RY3) um eine zur Querdrehachse (Y) parallele Achse zu neigen, um die Achse (12) des optischen Strahls (2) durch Schwenken um die Mitte (O) der Pupille des Mikroskopobjektivs (1) winkelmäßig zu neigen, wobei der optische Strahl (2) auf die Mitte (O) der Pupille des Mikroskopobjektivs (1) in einem Neigungswinkelbereich der Achse (12) des optischen Strahls (2) gegenüber der optischen Längsachse (10) zentriert bleibt, um den optischen Strahl in den beiden quer verlaufenden Raumrichtungen (X, Y) in der Objektebene (11) zu verlagern.

**2.** Mikroskopiegerät mit optischer Abtastung gemäß Anspruch 1, bei dem das Betätigungsmittel (25) mit zwei Drehachsen des ersten Spiegels (M-XY1) vom piezoelektrischen Typ oder vom Typ einer akustischen Spule ist und bei dem das Betätigungsmittel (26) mit zwei Drehachsen des zweiten Spiegels (M-XY2) vom piezoelektrischen Typ oder vom Typ einer akustischen Spule ist.

**3.** Mikroskopiegerät mit Abtastung durch einen optischen Strahl gemäß einem der Ansprüche 1 oder 2, bei dem das Betätigungsmittel (25) des ersten Spiegels (M-XY1) einen ein Positionssignal abgebenden Positionssensor aufweist und bei dem das Betätigungsmittel (26) des zweiten Spiegels (M-XY2) einen Positionssensor aufweist, wobei das Gerät ein System mit Phasenverriegelungsschleife aufweist, das dazu ausgelegt ist, ein Steuerungssignal des Betätigungsmittels (26) des zweiten Spiegels (M-XY2) in Abhängigkeit vom Positionssignal des Betätigungsmittels (25) des ersten Spiegels (M-XY1) anzusteuern.

4.  Mikroskopiegerät mit Abtastung durch einen optischen Strahl gemäß einem der Ansprüche 1 bis 3, bei dem der zweite Drehwinkel (RX2) vom ersten Drehwinkel (RX1), vom Abstand B zwischen dem ersten Spiegel (M-XY1) und dem zweiten Spiegel (M-XY2) und dem Abstand A zwischen dem zweiten Spiegel (M-XY2) und der Mitte (O) der Eingangspupille des Mikroskopobjektivs (1) abhängt.

5.  Mikroskopiegerät mit Abtastung durch einen optischen Strahl gemäß einem der Ansprüche 1 bis 4, bei dem die wenigstens eine Lichtquelle (20) eine oder mehrere Quellen vom Typ einer Laserquelle und/oder einer Leuchtdiode aufweist.

6.  Mikroskopiegerät mit Abtastung durch einen optischen Strahl gemäß einem der Ansprüche 1 bis 5, das außerdem einen zwischen der Lichtquelle (20) und dem Mikroskopobjektiv (1) angeordneten Strahlaufweiter (31) aufweist, wobei der Strahlaufweiter (31) eine feste und/oder variable Vergrößerung aufweist.

7.  Mikroskopiegerät mit Abtastung durch einen optischen Strahl gemäß einem der Ansprüche 1 bis 6, das außerdem eine Anzeigekamera (9) aufweist, die dazu ausgelegt ist, ein Bild der Objektebene (11) des Mikroskopobjektivs zu bilden und/oder einen Bereich einer mit dem optischen Strahl abgetasteten Probe anzuzeigen.

8.  Mikroskopiegerät mit Abtastung durch einen optischen Laserstrahl gemäß einem der Ansprüche 1 bis 7, bei dem das Mikroskopiegerät ein konfokales Loch (34) aufweist, das in einer mit der Objektebene optisch konjugierten Ebene angeordnet ist und das Mittel für die Kollimation des optischen Strahls (2) aufweist, die zwischen der wenigstens einen Lichtquelle und dem Mikroskopobjektiv angeordnet sind, um einen kollimierten optischen Strahl zu bilden, wobei der erste Spiegel (M-XY1) und der zweite Spiegel (M-XY2) in Reihe auf dem optischen Weg des kollimierten optischen Strahls angeordnet sind.

9.  Mikroskopiegerät mit Abtastung durch einen optischen Strahl gemäß einem der Ansprüche 1 bis 8, bei dem das Mikroskopiegerät mit einem Raman-Spektrometer, einem kohärenten Anti-Stokes Raman-Spektrometer, einem Fluoreszenz-Spektrometer, einem Photolumineszenz-Spektrometer oder einem Kathodenlumineszenz-Spektrometer kombiniert ist, das dazu ausgelegt ist, ein Signal durch Reflexion, Übertragung und/oder Streuung des optischen Strahls (2) an der Probe in Abhängigkeit von der winkelmäßigen Verlagerung des optischen Strahls zu messen und zu analysieren.

10. Mikroskopieverfahren mit Abtastung durch einen optischen Strahl mit den folgenden Schritten:

    - Aussenden eines optischen Strahls (2) mittels einer Lichtquelle,
    - optische Reflexion des Laserstrahls (2) an einem ersten Spiegel (M-XY1) und dann an einem zweiten Spiegel (M-XY2), die in Reihe auf dem optischen Weg des Laserstrahls (2) zwischen der Lichtquelle und einem Mikroskopobjektiv (1) angeordnet sind,
    - Neigen des ersten Spiegels (M-XY1) um einen vorbestimmten ersten Drehwinkel (RX1) um eine erste Drehachse (X) und um einen vorbestimmten dritten Drehwinkel (RY1) um eine Querdrehachse (Y),
    - Neigen des zweiten Spiegels (M-X2, M-XY2) um einen vorbestimmten zweiten Drehwinkel (RX2) in Abhängigkeit vom ersten Drehwinkel (RX1) um eine zur ersten Drehachse (X) parallele Drehachse und um einen vorbestimmten vierten Drehwinkel (RY2) in Abhängigkeit vom dritten Drehwinkel (RY1) um eine zur Querdrehachse (Y) parallele Achse, um die Achse (12) des optischen Strahls (2) durch Schwenken um die Mitte (O) der Pupille des Mikroskopobjektivs (1) in einem Neigungswinkelbereich der Achse (12) des optischen Strahls (2) gegenüber eine optischen Längsachse (10) winkelmäßig zu neigen, und
    - Fokalisierung des optischen Strahls (2) in einer Objektebene (11) mittels des Mikroskopobjektivs (1), um den optischen Strahl (2) entlang einer Raumrichtung (X) in der Objektebene (11) und in einer anderen Raumrichtung (Y) in der Objektebene (11) zu verlagern.

Claims

1.  Apparatus for optical beam scanning microscopy comprising:

- at least one light source (20) adapted to emit an optical beam (2);
- a microscope objective (1) having an entrance pupil, the microscope objective (1) being arranged according to a longitudinal optical axis (10) of the microscopy apparatus, the pupil having a center (O) on the longitudinal optical axis (10) and the microscope objective (1) being adapted for focusing said optical beam (2) in an object plane (11) transverse to the longitudinal optical axis (10);
- means for the angular displacement of the optical beam (2) according to two transverse spatial directions (X, Y) in the object plane (11); **characterized in that** said means for the angular displacement of the optical beam (2) are consisted of:

  - a first mirror (M-XY1) and a second mirror (M-XY2) disposed in series on the optical path of the optical beam (2) between the light source (20) and the microscope objective (1),
  - the first mirror (M-XY1) being mounted on an actuator (25) with two axes of rotation, the actuator (25) being suitable for tilting the first mirror (M-XY1) according to a predetermined first rotation angle (RX1) around a first axis of rotation (X) and for tilting the first mirror (M-XY1) according to a predetermined third rotation angle (RY3) around a transverse axis of rotation (Y),
  - and
  - the second mirror (M-XY2) being mounted on an actuator (26) with two axes of rotation suitable for tilting the second mirror (M-XY2) according to a second rotation angle (RX2) predetermined as a function of the first rotation angle (RX1) around an axis parallel to the first axis of rotation (X) and for tilting the second mirror (M-XY2) according to a fourth rotation angle (RY4) predetermined as a function of the third rotation angle (RY3) around an axis parallel to the transverse axis of rotation (Y), in such a way as to angularly tilt the axis (12) of the optical beam (2) by pivoting about the center (O) of the pupil of the microscope objective (1), said optical beam (2) remaining centered on the center (O) of the pupil of the microscope objective (1) in a range of tilting angles of the axis (12) of the optical beam (2) with respect to the longitudinal optical axis (10), in such a way as to displace the optical beam according to the two transverse spatial directions (X, Y) in the object plane (11).

2. Apparatus for optical scanning microscopy according to claim 1 wherein the actuator (25) with two axes of rotation of the first mirror (M-XY1) is of the piezoelectric or voice coil type, and/or wherein the actuator (26) with two axes of rotation of the second mirror (M-XY2) is of the piezoelectric or voice coil type.

3. Apparatus for optical beam scanning microscopy according to one of claims 1 or 2 wherein the actuator (25) of the first mirror (M-XY1) comprises a position sensor that supplies a position signal and wherein the actuator (26) of the second mirror (M-XY2) comprises a position sensor, with the apparatus comprising a phase locked loop system adapted to drive a control signal of the actuator (26) of the second mirror (M-XY2) as a function of the position signal of the actuator (25) of the first mirror (M-XY1).

4. Apparatus for optical beam scanning microscopy according to one of claims 1 to 3 wherein the second rotation angle (RX2) is function of the first rotation angle (RX1), the distance B between the first mirror (M-XY1) and the second mirror (M-XY2) and the distance A between the second mirror (M-XY2) and the center (O) of the entrance pupil of the microscope objective (1).

5. Apparatus for optical beam scanning microscopy according to one of claims 1 to 4 wherein said at least one light source (20) comprises one or several sources of the laser source and/or light-emitting diode type.

6. Apparatus for optical beam scanning microscopy according to one of claims 1 to 5, further comprising a beam expander (31) disposed between the light source (20) and the microscope objective (1), with the beam expander (31) having a fixed and/or variable magnification.

7. Apparatus for optical beam scanning microscopy according to one of claims 1 to 6 further comprising a viewing camera (9) adapted to form an image of the object plane (11) of the microscope objective and/or to view a zone of a sample scanned with optical beam scanning.

8. Apparatus for optical beam scanning microscopy laser according to one of claims 1 to 7, wherein the microscopy apparatus comprises a confocal hole (34) disposed in a plane optically conjugated with the object plane (11) and comprising means for collimating the optical beam (2) disposed between the at least one light source and the microscope objective in order to form a collimated optical beam, the first mirror (M-XY1) and the second mirror (M-XY2) being disposed in series on the optical path of the collimated optical beam.

9. Apparatus for optical beam scanning microscopy according to one of claims 1 to 8 wherein the microscopy apparatus is combined with a Raman spectrometer, a coherent anti-Stokes Raman spectrometer, a fluorescence spectrometer, a photoluminescence spectrometer, or a cathodoluminescence spectrometer adapted to measure and analyze a signal by reflection, transmission and/or scattering of the optical beam (2) on the sample as a function of an angular displacement of the optical beam.

10. Method for optical beam scanning microscopy comprising the following steps:

- emitting of an optical beam (2) by means of a light source;
- optical reflecting of said laser beam (2) on a first mirror (M-XY1) then on a second mirror (M-XY2) disposed in series on the optical path of the laser beam (2) between the light source and a microscope objective (1),
- tilting of the first mirror (M-XY1) according to a predetermined first rotation angle (RX1) around a first axis of rotation (X) and according to a predetermined third rotation angle (RY3) around a transverse axis of rotation (Y),
- tilting of the second mirror (M-XY2) according to a second rotation angle (RX2) predetermined as a function of the first rotation angle (RX1) around an axis parallel to the first axis of rotation (X), and according to a fourth rotation angle (RY4) predetermined as a function of the third rotation angle (RY3) around an axis parallel to the transverse axis of rotation (Y), in such a way as to angularly tilt the axis (12) of the optical beam (2) by pivoting about the center (O) of the pupil of the microscope objective (1), in a range of tilting angles of the axis (12) of the optical beam (2) with respect to the longitudinal optical axis (10); and
- focusing said optical beam (2) in an object plane (11) by means of said microscope objective (1), in such a way as to displace said optical beam (2) according to one spatial direction (X) in the object plane (11) and according to one other spatial direction (Y) in the object plane (11).

# Fig.1
ART ANTERIEUR

# Fig.2
ART ANTERIEUR

# Fig.3

# Fig.4

Fig.5

Fig.6

# Fig.7

## Fig.8

M-X2

22

M-X1

M-Y2

2

24

21

23

M-Y1

## Fig.9

M-Y2

M-X2

M-X1

2

M-Y1

1

11    12

EP 3 132 237 B1

**Fig.10**

**Fig.11**

**Fig.12**

24

**Fig.13**

**Fig.14**

**Fig.15**

**Fig.16**

25    M-XY1    2

y

z    x    12

26

M-XY2

**Fig.17**

12    M-XY1    2

M-XY2

**Fig.18**

26

M-XY2

M-XY1

2

25

12

Fig.19

Fig.20

Fig.21

Fig.22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1983332 A
- WO 2010069987 A
- US 2005128476 A
- JP 2001091848 A
- WO 002008128971 A2
- WO 2013014379 A
- FR 1156687